# EUROPEAN PATENT SPECIFICATION

(11) **EP 4 263 230 B1**
(45) Date of publication and mention of the grant of the patent: **16.10.2024**
(21) Application number: 21844227.5
(22) Date of filing: 19.12.2021
(51) Int. Cl.: B41J 2/44, B41J 2/475

(54) **LASER MARKING SYSTEM**
LASERMARKIERUNGSSYSTEM
SYSTÈME DE MARQUAGE PAR LASER

(30) Priority: 21.12.2020 GB 202020243
(43) Date of publication of application: 25.10.2023
(73) Proprietor: ALLTEC ANGEWANDTE LASERLICHT TECHNOLOGIE GMBH, 23923 Selmsdorf (DE)
(72) Inventor: WULF, Christian, 23860 Klein Wesenberg (DE); FECHNER, Matthias, 21465 Reinbek (DE); LUECHOW, Andreas, 23744 Schoenwalde (DE); SEUTHE, Christian, 23923 Selmsdorf (DE); FRANITZA, Till, 23566 Lubeck (DE); KUECKENDAHL, Peter J., 23843 Bad Oldesloe (DE); SIXEL, Stefan, 23554 Lübeck (DE); GROSSMANN, Stefan, 23619 Zarpen (DE); KERKER, Christian, 23564 Luebeck (DE)
(74) Representative: Marks & Clerk LLP
(86) International application number: PCT/EP2021/086682
(87) International publication number: WO 2022/136202

(56) References cited:
- WO-A1-2018/048447
- US-A1- 2009 315 486
- US-A1- 2012 147 116
- US-A1- 2014 078 237
- US-A1- 2017 031 264

## Description

### FIELD

The present invention relates to a laser marking system suitable for marking a surface of one or more objects. Aspects and implementations of the present disclosure are directed generally to laser scanning and laser marking equipment. More particularly, the present invention relates to a laser marking system comprising multiple laser marking heads, wherein each laser marking head is associated with its own controller.

### BACKGROUND

A laser marking system may use laser radiation to mark product surfaces with information such as manufacturers' names, part numbers, model numbers, times, dates, etc. When the laser marking system forms part of a production line comprising multiple moving products, there is a need for quick, efficient, and accurate marking of the products moving along the production line.

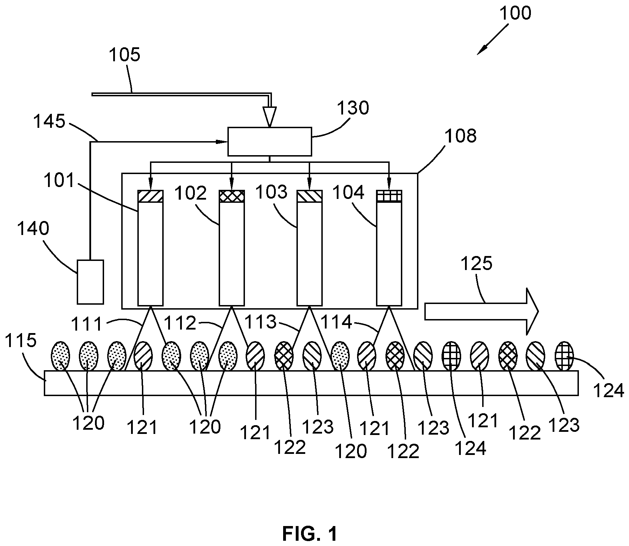

Fig. 1 schematically depicts a known laser marking system 100 comprising four laser marking heads 101-104. The laser marking heads 101-104 are configured to direct laser light 111-114 at products 120-124 moving along a production line 115 in a first direction 125. The laser light 111-114 interacts with and thereby marks the products 120-124 as the products pass by the laser marking heads 101-104. The laser marking heads 101-104 are all housed in a shared housing 108. A single central controller 130 is connected to the laser marking heads 111-114 and is used to control the laser marking heads 101-104. The central controller 130 is configured to receive data 105 indicating information to be marked on the products 120-124. The controller 130 is configured to generate laser marking vectors based upon the received data 105. The controller 130 is further configured to control the laser marking heads 101-104 based on the generated laser marking vectors.

The laser marking heads 101-104 are arranged in a laser marking head sequence relative to the products 120-124 on the product line 115. Unmarked products 120 approaching the laser marking heads 101-104 are detected by a detector 140. The detector 140 provides a detection signal 145 to the central controller 105. The central controller 130 uses the detection signal 145 and the laser marking head sequence to determine which products 120-124 receive which marks. The centralised controller 130 controls a first laser marking head 101 to mark a first set of products 121 with a first mark. The first set of products 121 corresponds to the first, fifth, ninth, etc. products to pass the product detector 140. The centralised controller 130 controls a second laser marking head 102 to mark a second set of products 122 with a second mark. The second set of products 122 corresponds to the second, sixth, tenth, etc. products to pass the product detector 140. The centralised controller 130 controls a third laser marking head 103 to mark a third set of products 123 with a third mark. The third set of products 123 corresponds to the third, seventh, eleventh, etc. products to pass the product detector 140. The centralised controller 130 controls a fourth laser marking head 104 to mark a fourth set of products 110 with a fourth mark. The fourth set of products 124 corresponds to the fourth, eighth, twelfth, etc. products to pass the product detector 140. In alternative known laser marking systems, the centralised controller 130 may control a first laser marking head 101 to mark a first part of a message on a product 120-124 and control a second laser marking head 102 to mark a second part of the message on the same product 120-124. The central controller 130 may control the first and second laser marking heads 101, 102 to mark the product 120-124 at different locations on the product at approximately the same time.

A problem with known laser marking systems is that they are inflexible to changes. For example, a user may want to add or subtract from the number of laser marking head 101-104 to account for a change in the throughput of products on the production line. However, the central controller 130 needs to be reprogrammed each time the number of laser marking heads 101-104 changes, and any message to be marked by any of the laser marking heads 101-104 needs to be changed each time the number of laser marking heads 101-104 changes. As a further example, if one of the laser marking heads 101-104 fails and/or if the central controller 130 fails, the entire known laser marking system becomes non-functional. As a yet further example, sometimes at least one of the laser marking heads 101-104 is not able to complete a message to be marked on the product while the product is in the marking field of the at least one marking head. With increasing line travel speed the time each laser has to complete a message decreases. If the time is too short, the entire solution does not work at all. It is common for the message content to change (e.g. increase because a user would like more information to be marked on the products). The marking time required to complete these messages increases. If the timespan a product needs to travel through the marking field is too short, the entire solution does not work. Another problem with known laser systems is that, as the throughput of product to be marked increases, the central controller 130 may become a bottleneck because the central controller 130 is not able to determine laser marking vectors and distribute the laser marking vectors amongst the laser marking heads 101-104 quickly enough to keep up with the throughput of products.

It is therefore an aim of the present disclosure to provide a laser marking system that addresses one or more of the problems above, or at least provides a useful alternative.

WO2018048447 discloses a printing apparatus including a first output bin, a second output bin, a first light source positioned to illuminate a portion of the first output bin, a second light source positioned to illuminate a portion of the second output bin, and a controller. The controller may activate the first light source in response to a media being outputted to the first output bin and may activate the second light source in response to a media being outputted to the second output bin to direct a user to the first output bin and/or the second output bin containing a most recently printed media.

### SUMMARY

According to a first aspect of the present disclosure, there is provided a laser marking system comprising first and second laser marking heads configured to mark a product. The laser marking system further comprises a first controller associated with the first laser marking head and a second controller associated with the second laser marking head. The first and second controllers are configurable to receive data indicating information to be marked on the product, generate laser marking vectors based upon the received data, and control their associated laser marking head based on the laser marking vectors.

The first and second laser marking heads may each comprise galvo mirrors for directing a laser beam to a desired location with marking fields of each of the laser marking heads. The laser marking system may comprise a first processor configured to control the galvo mirrors of the first laser marking head based on the laser marking vectors and a second processor configured to control the second laser marking head based on the laser marking vectors. The first processor may form part of the first controller and the second processor may form part of the second controller. The first controller may form part of a first unit. The first unit may comprise a first laser source configured to generate a first laser light. The first controller may be configured to control the first laser source. The first unit may be connected to the first laser marking head by a first connector. The first connector may be configured to transmit the first laser light from the first laser source to the first laser marking head. The first connector may be configured to transmit a first control signal from the first controller to the first laser marking head. The second controller may form part of a second unit. The second unit may comprise a second laser source configured to generate a second laser light. The second controller may be configured to control the second laser source. The second unit may be connected to the second laser marking head by a second connector. The second connector may be configured to transmit the second laser light from the second laser source to the second laser marking head. The second connector may be configured to transmit a second control signal from the second controller to the second laser marking head.

The first and second marking heads may each have a small form-factor. The first and second marking heads may each comprise parallel galvo mirrors. The first and second marking heads may not include an optical isolator.

The laser marking system may be modular. That is, the first laser marking head may be replaced by the second laser marking head, and vice versa, and the first controller may be replaced by the second controller, and vice versa.

The first and second laser marking heads may be configured to mark the same product.

The first and second marking heads may be substantially identical (i.e. comprising substantially the same components).

The first and second controllers may be substantially identical (i.e. comprising substantially the same components).

Generating the laser marking vectors may involve rendering the laser marking vectors based on the data.

Use of words such as "first" and "second" are intended merely to differentiate different features of the invention. Such words are not necessarily intended to indicate any ordering of the features. Such words do not exclude the existence of further features (e.g. the laser marking system may comprise third, fourth, fifth, etc. laser marking heads and/or controllers).

Controlling the associated laser marking head based on the laser marking vectors may comprise using digital signal processing. Rendering laser marking vectors may be less time critical than the process of controlling the galvanometers of the marking heads and/or controlling a laser source that provides the marking heads with laser radiation.

The first controller may be configured to receive the data indicating information to be marked on the product. The first controller may be configured to generate the laser marking vectors based on the data. The first controller may be configured to determine a first sub-set of the laser marking vectors to retain and a second sub-set of the laser marking vectors to provide to the second controller. The first controller may be configured to control the first laser marking head at least partially based on the first subset of the laser marking vectors. The first controller may be configured to provide the second sub-set of the laser marking vectors to the second controller. The second controller may be configured to control the second laser marking head at least partially based on the second sub-set of the laser marking vectors.

The first controller may be configured to receive the data indicating information to be marked on the product. The first controller may be configured to determine a first sub-set of the data to retain and a second sub-set of the data to provide to the second controller. The first controller may be configured to generate a first sub-set of the laser marking vectors based on the first sub-set of data. The first controller may be configured to control the first laser marking head at least partially based on the first sub-set of the laser marking vectors. The first controller may be configured to provide the second sub-set of the data to the second controller. The second controller may be configured to generate a second sub-set of the laser marking vectors based on the second sub-set of the data. The second controller may be configured to control the second laser marking head at least partially based on the second sub-set of the laser marking vectors.

The first controller may be configured to receive the data indicating information to be marked on the product. The first controller may be configured to determine a first sub-set of the data to be marked by the first laser marking head and a second sub-set of the data to be marked by the second laser marking head. The first controller may be configured to generate a first sub-set of the laser marking vectors based on the first sub-set of the data and generate a second sub-set of the laser marking vectors based on the second sub-set of the data. The first controller may be configured to control the first laser marking head at least partially based on the first sub-set of laser marking vectors. The first controller may be configured to provide the second sub-set of the laser marking vectors to the second controller. The second controller may be configured to control the second laser marking head at least partially based on the second sub-set of the laser marking vectors.

The first and second sub-sets of laser marking vectors may be different.

The different sub-sets of the data may correspond to different characters, different parts of characters and/or different lines of text to be marked on the product. The different sub-sets of the data may form part of a single image or single message to be marked on the product.

The first controller may be configured to generate a third sub-set of the data indicating information to be marked on the product. The first controller may be configured to generate a third sub-set of the laser marking vectors based on the third sub-set of data. The first controller may be configured to provide the third sub-set of laser marking vectors to the second controller. The second controller may be configured to control the second laser marking head at least partially based on the third sub-set of the laser marking vectors.

The third sub-set of data may indicate dynamic information to be marked on the product. The third sub-set of laser marking vectors may be static.

The first controller may be referred to as a leader controller. The second controller may be referred to as a follower controller.

The dynamic information may comprise a time, a date, a serial number, etc.

The first controller may be configured to receive static information. The first controller may be configured to generate data indicative of information to be marked based on both dynamic information and static information.

The first controller may receive a message comprising both static and dynamic fields. For example, the static field may comprise text stating "Best before" and the dynamic field may comprise a best before date that is to be determined by the first controller.

The dynamic information may form part of a larger message to be marked on the product, not all of which was generated by the first controller. This advantageously avoids the need for content synchronization between the dynamic information and the plurality of laser marking heads.

The first and second laser marking heads may be arranged such that their marking fields at least partially overlap.

The first and second laser marking heads may be configured to simultaneously mark within the at least partially overlapping marking fields. This advantageously reduces overall processing time per product.

The first and second laser marking heads may be configured to mark within the at least partially overlapping marking fields at different times.

The first and second laser marking heads may be arranged to oppose each other for marking a product passing between the first and second laser marking heads.

The first and second laser marking heads may be arranged such that their marking fields at least partially overlap in a movement direction of the product.

The first and second laser marking heads may be arranged such that their marking fields at least partially overlap in a direction that is substantially perpendicular to a movement direction of the product.

The first and second laser marking heads may be arranged such that their marking fields completely overlap. This advantageously reduces marking distortion caused by product movement during the marking process.

The first laser marking head may be configured to project a first visible alignment pattern. The second laser marking head may be configured to project a second visible alignment pattern. The first and second visible alignment patterns may be configured to allow relative alignment of the marking fields of the first and second laser marking heads. This advantageously makes it easier to set-up the laser marking system. This also advantageously increases a precision with which X/Y and/or rotation offsets, scale and/or Z-axis offsets may be corrected.

The visible alignment patterns may comprise any shape such as a rectangle, crosshairs, etc.

The laser marking system may comprise a detector configured to detect the visible patterns and produce a detection signal indicative of the relative alignment of the marking fields of the first and second laser marking heads. The laser marking system may further comprise an actuation system configured to use the detection signal to move at least one of the first and second laser marking heads to bring the marking fields into relative alignment.

The laser marking system may comprise a first detector configured to detect a position of the product relative to the first laser marking head and output a first detector signal indicative of the position. The second controller may be configured to receive the first detector signal and control the second laser marking head at least partially based on the first detector signal.

The second controller may use the first detector signal to determine a marking position on the product (i.e. a point on the product that is to be marked). The second controller may control the second laser marking head (e.g. by sending control signals to galvo mirrors of the second laser marking head) such that the second laser marking head directs laser radiation to the marking position.

The first detector may comprise a camera.

The laser marking system may form part of a production line comprising a conveyor belt. The conveyor belt may carry the product to discrete stations (e.g. in discrete steps and/or within discrete time intervals). A first station may include the first laser marking head and a second station may include the second laser marking head. The relative position detected by the first detector may be used to control a laser marking head at a different station. The relative position detected by the first detector may be referred to by the first and/or second controller to determine one or more marking positions on the product. This advantageously avoids the need for multiple detectors to determine marking positions per marking head, thereby offering a simple solution and supporting a modularity of the laser marking system.

The laser marking system may comprise a second detector configured to detect a previously marked position on the product and output a second detector signal indicative of the previously marked position. At least one of the first and second controllers may be configured to receive the second detector signal and use the second detector signal to determine a subsequent marking position on the product. This advantageously reduces or prevents misalignment of code segments marked by two or more laser systems on one product.

The laser marking system may comprise a holder configured to support the first and second laser marking heads in pre-determined positions relative to the holder.

The holder may comprise a first scale configured to indicate a position of the first laser marking head relative to the holder. This advantageously solves an issue that arises at least partially due to a modularity of the laser marking system. For example, different laser marking heads having different characteristics (e.g. focal lengths or working distances) are all interchangeable. As such, there exists a need to make sure that each laser marking head is installed correctly by a user of the laser marking system according to its own characteristics. This problem is not encountered in prior art laser marking systems, e.g. known laser marking systems comprising multiple scan heads fixed relative to each other and having a shared housing. In addition, this advantageously improves an ease-of-use of product changeover at a user's production line. This also advantageously allow compensation of working distance differences combined with common horizontal and vertical alignment correction opportunities.

The holder may comprise a body portion and a receiver configured to receive the first laser marking head. The holder may comprise a first mark indicative of a position of the body portion and a second mark indicative of a position of the receiver. The receiver may be configured to receive the first laser marking head in a fixed arrangement. That is, once the first laser marking head is received in the receiver, a position of the first laser marking head relative to the second mark is fixed.

The holder may comprise a first actuator configured to adjust the position of the first laser marking head relative to the holder. The first actuator may be configured to adjust a vertical position, a horizontal position and/or an angle of the first laser marking head relative to the product.

The first scale may comprise an indication mark configured to indicate a pre-determined position of the first laser marking head relative to the holder.

The pre-determined position may correspond to a correct working distance of the first laser marking head.

The holder may comprise a second scale configured to indicate a position of the second laser marking head relative to the holder.

The holder may comprise a second actuator configured to adjust the position of the second laser marking head relative to the holder. Adjusting the position of the second laser marking head relative to the holder may adjust a position of the second laser marking head relative to the first laser marking head. The second actuator may be configured to adjust a vertical position, a horizontal position and/or an angle of the second laser marking head relative to the product. By having both first and second scales, each showing relative positions of their respective laser marking heads to the holder, a relative position between the two laser marking heads can be determined (and controlled).

The holder may comprise an actuator configured to adjust a position of both of the first and second laser marking heads relative to the holder. The actuator may be configured to adjust a vertical position, a horizontal position and/or an angle of the first and second laser marking heads relative to the product. The actuator may move the first and second laser marking heads together.

The holder may comprise a third detector fixed to the holder in a known arrangement relative to the holder. The third detector may be configured to detect a position of the product relative to the holder. This advantageously ensures that, when changing the product to be marked by the laser marking system, there is only one thing to change (i.e. the working distance of the laser marking heads, rather than both the laser marking heads and the sensor). The holder may hold the laser marking heads at fixed pre-determined arrangements and/or distances with respect to the holder. This advantageously improves an ease with which a user may set up the laser marking system in a production line, and particularly those comprising moving products (e.g. conveyor belts).

The laser marking system may comprise a shielding apparatus configured to house at least one of the first and second laser marking heads. The shielding apparatus may comprise an external shielding portion configured to selectively allow physical objects to pass through the shielding apparatus. The shielding apparatus may comprise an internal shielding portion configured to prevent at least some laser radiation (e.g. stray laser radiation) from exiting the shielding apparatus.

The external shielding portion may comprise a first material. The internal shielding portion may comprise a second material. The second material may be more flexible than the first material.

The first material may comprise a metal. The second material may comprise a softer, more curtain-like material. The second material may be soft enough to cut into a desired shape using scissors or a blade.

Metal safety shields at the entry and exit of the shielding apparatus may be configured to form a substantially rectangular opening configured to surround a production line, e.g. a conveyor belt. An additional internal soft curtain provides flexibility of use. The combination of solid shields for mechanical ingress protection and a soft curtain for laser radiation shielding advantageously provides a substantially universal, highly flexible safety solution for laser class 1 beam shields that are tailorable on-site to a users' demands.

The external shielding portion may comprise a plurality of moveable shields.

The first laser marking head may be configured to perform a first material treatment of the product. The second laser marking head may be configured to perform a different material treatment of the product.

The first material treatment may involve pre-treating (e.g. heating, engraving, laser polishing, etc.) the product. The second material treatment may involve marking the pre-treated regions of the product.

The first controller may be configured to adjust an output power of the first laser marking head. The second controller may be configured to adjust an output power of the second laser marking head. Power adjustments may be performed by a controller of an individual laser marking head, and may form part of a final step of generating control signals for galvo mirrors of the laser marking heads. This advantageously accounts for any degeneration of the laser marking heads.

At least one of the first and second laser marking heads may comprise a variable focal length system configured to mark the product at different focal lengths. In the case of 3-dimentional objects having a prominent surface that extends not only in X and Y directions but in a direction perpendicular those, so-called "shadow zones" may exist on the objects that may not be reached by the focus of only one laser marking head. These shadow zones can be marked at the same time or different times by a second or further laser marking heads directed onto those shadow zone areas. This may preferably be done using a laser marking head having a dynamically adjustable focal distance.

The laser marking system may comprise a first laser marking head having a dynamically adjustable focal distance and a second laser marking head having a fixed focal distance. It may be preferable for only a single laser marking head to have a dynamically adjustable focal distance, with the remaining laser marking heads in the laser marking system having a fixed focal distance. This advantageously achieves the benefit of being able to address and mark shadow zones on products whilst also avoiding an overly complex and/or costly laser marking system.

The first and second laser marking heads may be daisy-chained in a laser marking head sequence for sequential marking of the product. Each laser marking head may comprise an input port and an output port (e.g. Ethernet ports). The laser marking heads may be daisy-chained via connectors connecting an output port of one laser marking head to an input port of the next laser marking head in the laser marking head sequence (e.g. the connectors may be Ethernet cables travelling between the Ethernet ports).

The laser marking system of claim may comprise a fourth detector configured to detect a position of the product relative to a marking field of the first laser marking head and output a fourth detector signal indicative of the position of the product relative to the marking field of the first laser marking head. The first controller may be configured to receive the data indicating information to be marked on the product. The first controller may be configured to generate a portion of the laser marking vectors based upon the received data. The first controller may be configured to control the first laser marking head based on the generated portion of laser marking vectors and the fourth detector signal. The first controller may be configured to produce an output signal indicative of a remaining portion of the data indicative of information to be marked on the product. The second controller may be configured to receive the output signal indicative of the remaining portion of the data. The second controller may be configured to generate remaining laser marking vectors based upon the received signal. The second controller may be configured to control the second laser marking head based on the remaining laser marking vectors and the fourth detector signal.

The first controller may be configured to receive product speed information. The first controller may be configured to use the product speed information and the fourth detector signal to determine whether the first laser marking head has enough time to print a laser marking vector. If the first controller determines that the first laser marking head does not have enough time to print the laser marking vector, the first controller may be configured to stop the first laser marking head from marking the product and pass the laser marking vector to the second controller as part of the output signal.

The laser marking system may comprise a user interface configured to at least partially control all of the laser marking heads. The user interface may communicate with all of the controllers. The user interface may communicate with a leader controller, and thereby control the leader laser marking head and the follower laser marking head.

According to a second aspect of the present disclosure, there is provided a method of laser marking a product comprising receiving data indicating information to be marked on the product. The method comprises generating laser marking vectors based upon the received data. The method comprises using a first controller to control a first laser marking head based on the laser marking vectors to mark the product. The method comprises using a second controller to control a second laser marking head based on the laser marking vectors to mark the product.

The method may comprise using the first controller to generate the laser marking vectors based on the data. The method may comprise determining a first sub-set of the laser marking vectors to retain for the first controller and a second sub-set of the laser marking vectors to provide to the second controller. The method may comprise using the first controller to control the first laser marking head at least partially based on the first subset of the laser marking vectors. The method may comprise providing the second sub-set of the laser marking vectors to the second controller. The method may comprise using the second controller to control the second laser marking head at least partially based on the second sub-set of the laser marking vectors.

The method may comprise determining a first sub-set of the data to retain for the first controller and a second sub-set of the data to provide to the second controller. The method may comprise using the first controller to generate a first sub-set of the laser marking vectors based on the first sub-set of the data. The method may comprise using the first controller to control the first laser marking head at least partially based on the first subset of the laser marking vectors. The method may comprise providing the second sub-set of the data to the second controller. The method may comprise using the second controller to generate a second sub-set of the laser marking vectors based on the second sub-set of the data. The method may comprise using the second controller to control the second laser marking head at least partially based on the second sub-set of the laser marking vectors.

The method may comprise determining a first sub-set of the data to retain for the first controller and a second sub-set of the data to provide to the second controller. The method may comprise using the first controller to generate a first sub-set of the laser marking vectors based on the first sub-set of the data and a second sub-set of the laser marking vectors based on the second sub-set of the data. The method may comprise using the first controller to control the first laser marking head at least partially based on the first sub-set of laser marking vectors. The method may comprise providing the second sub-set of the laser marking vectors to the second controller. The method may comprise using the second controller to control the second laser marking head at least partially based on the second sub-set of the laser marking vectors.

The method may comprise using the first controller to generate a third sub-set of the data indicating information to be marked on the product. The method may comprise using the first controller to generate a third sub-set of the laser marking vectors based on the third sub-set of data. The method may comprise providing the third sub-set of laser marking vectors to the second controller. The method may comprise using the second controller to control the second laser marking head at least partially based on the third sub-set of the laser marking vectors.

The third sub-set of data may indicate dynamic information to be marked on the product. The third sub-set of laser marking vectors may be static.

### BRIEF DESCRIPTION OF THE DRAWINGS

Embodiments of the invention will now be described, by way of example only, with reference to the accompanying schematic drawings, in which:
- Fig. 1 schematically depicts a known laser marking system.
- Fig. 2 schematically depicts a laser marking system according to an aspect of the present disclosure.
- Fig. 3A shows an example of how the information to be marked on a product may be used to generate sub-sets of laser making vectors.
- Fig. 3B shows an example of how the information to be marked on a product of Fig. 3A may be split between two laser marking heads according to an aspect of the present disclosure.
- Fig. 4A shows an example of how the information to be marked on a product of Fig. 3A may be split between three laser marking heads according to an aspect of the present disclosure.
- Fig. 4B shows an example of how a leader controller may be used to generate dynamic information to be marked on a product according to an aspect of the present disclosure.
- Fig. 5 schematically depicts a perspective view of the first laser marking head of Fig. 2.
- Fig. 6 schematically depicts an internal view of the laser marking head of Fig.5
- Fig. 7 shows a view through a side of the laser marking head of Fig. 6.
- Fig. 8A schematically depicts a perspective view of a first arrangement of first and second laser marking heads having partially overlapping marking fields according to an aspect of the present disclosure.
- Fig. 8B schematically depicts a perspective view of a second arrangement of first and second laser marking heads having partially overlapping marking fields according to an aspect of the present disclosure.
- Fig. 8C schematically depicts a view from the side of a third arrangement of first and second laser marking heads having completely overlapping marking fields according to an aspect of the present disclosure;
- Fig. 9 schematically depicts a perspective view of a fourth arrangement of first and second laser marking heads having completely overlapping marking fields according to an aspect of the present disclosure;
- Fig. 10, consisting of Figs. 10A-10D, shows four different alignment arrangements between first and second laser marking heads having first and second visible alignment patterns according to an aspect of the present disclosure.
- Fig. 11A schematically depicts a side view of a laser marking system comprising a second detector according to an aspect of the present disclosure.
- Fig. 11B schematically depicts a view from above the laser marking system of Fig. 11A.
- Fig. 12 schematically depicts a holder configured to support a first laser marking head according to an aspect of the present disclosure.
- Fig. 13A schematically depicts a front view of a holder system comprising a first holder configured to support a first laser marking head and a second holder configured to support a second laser marking head according to an aspect of the present disclosure.
- Fig. 13B schematically depicts a side view of the holder system of Fig. 13A.
- Fig. 14A schematically depicts a view from behind a holder system housing according to an aspect of the present disclosure.
- Fig. 14B schematically depicts a view from the side of the holder system housing of Fig. 14A.
- Fig. 15 schematically depicts a holder system comprising a third detector according to an aspect of the present disclosure.
- Fig. 16A schematically depicts a shielding apparatus configured to house a laser marking head according to an aspect of the present disclosure.
- Fig. 16B schematically depicts front views of the first set of moveable shields of Fig. 16A, an internal shielding portion and a combination thereof according to an aspect of the present disclosure.
- Fig. 17 shows a flowchart of a method of laser marking a product according to an aspect of the present disclosure.

### DETAILED DESCRIPTION

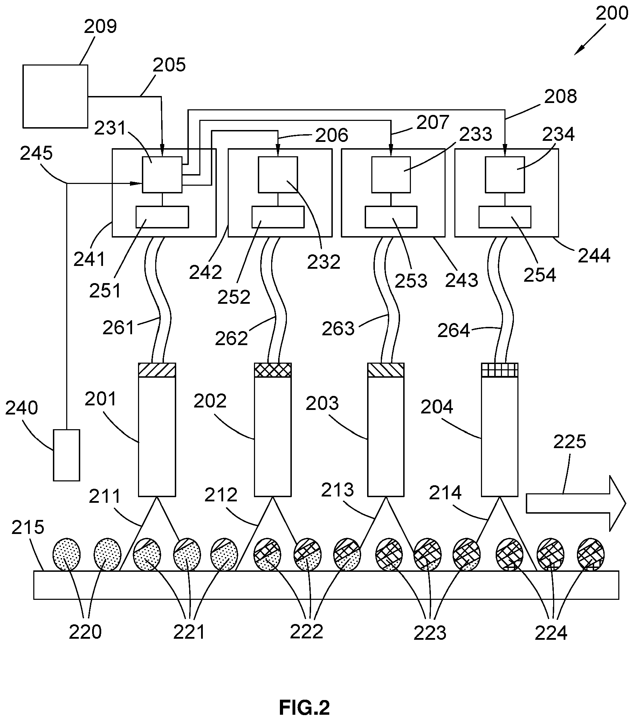

Fig. 2 schematically depicts a laser marking system 200 according to an aspect of the present disclosure. The laser marking system 200 comprises a plurality of laser marking heads 201-204 configured to mark products 220-224 using laser light 211-214. In the example of Fig. 2, the laser marking system 200 comprises four laser marking heads 201-204. The laser marking system 200 may comprise a greater number of laser marking heads (e.g. five or more) or a lesser number of laser marking head (e.g. two or three). In general, the laser marking system 200 comprises at least two laser marking heads 201-204. The products 220-224 move along a production line 215 in a first direction 225. In the example of Fig. 2, each laser marking head is configured to mark every product 220-224. The laser marking system 200 comprises a plurality of controllers 231-234. A first controller 231 is associated with a first laser marking head 201, a second controller 232 is associated with a second laser marking head 202, a third controller 233 is associated with a third laser marking head 203 and a fourth controller 234 is associated with a fourth laser marking head 204. The controllers 231-234 may be substantially identical (i.e. comprising substantially the same components). The laser marking system 200 may be modular. That is, any laser marking head 201-204 may be replaced by another laser marking head 201-204, and controller 231-234 may be replaced by another controller 231-234. The laser marking heads 201-204 are arranged in a laser marking head sequence relative to the products 220-224 on the product line 215. Unmarked products 220 approaching the laser marking heads 201-204 may be detected by a first detector 240. The first detector 240 is configured to detect a position of a product relative to the first laser marking head 201 and output a first detector signal 245 indicative of the position. The first detector 240 may provide the first detector signal 245 to the first controller 231. The first detector 240 may provide the first detector signal 245 to the second, third and/or fourth controllers 232-234.

Each controller 231-234 is configurable to receive data 205 indicating information to be marked the products 220-224. The data 205 indicating information to be marked on the products 220-224 may comprise characters such as letters or and/or numbers. The data 205 indicating information to be marked on the products may comprise a font of the characters. The data 205 indicating information to be marked on the products 220-224 may comprise dynamic information such as a time, a date, a variable serial number, etc. Each controller 231-234 may be configurable to receive industrial protocols. Each controller 231-234 may be connected to a user interface 209. The user interface 209 may comprise a monitor (not shown), e.g. a touch screen monitor, for displaying and adjusting one or more operating parameters of the laser marking system 200. The user interface 209 may be configured to control the laser marking heads 201-204. The user interface 209 may be in communication with the controllers 231-234 associated with the laser marking heads 201-204. The user interface 209 may be configured to control each laser marking head 201-204 individually and/or all laser marking heads 201-204 collectively. At least some of the data 205 indicating information to be marked on the products 220-224 may be generated by a user interacting with the user interface 209 (e.g. centrally selecting or adjusting information to be marked). In a leader-follower arrangement of laser marking heads 201-204 (described in detail below), the user interface 209 may control all of the laser marking heads 201-204 by virtue of controlling a lead controller 231 which, in turn, controls follow controllers 232-234.

Each controller 231-234 is configurable to generate laser marking vectors based upon the received data 205. Generating the laser marking vectors may comprise rendering the laser marking vectors based on the data 205. Each controller 231-234 is configurable to control their associated laser marking head 201-204 based on the laser marking vectors. Controlling the laser marking heads 201-204 based on the generated laser marking vectors may involve converting the laser marking vectors to control signals that are provided to galvanometer scanners (not shown) within the laser marking heads 201-204. The galvanometer scanners act to deflect the laser light 211-214 about a marking field (e.g. an X-Y plane) to different locations on the products 220-224 dependent on said control signals.

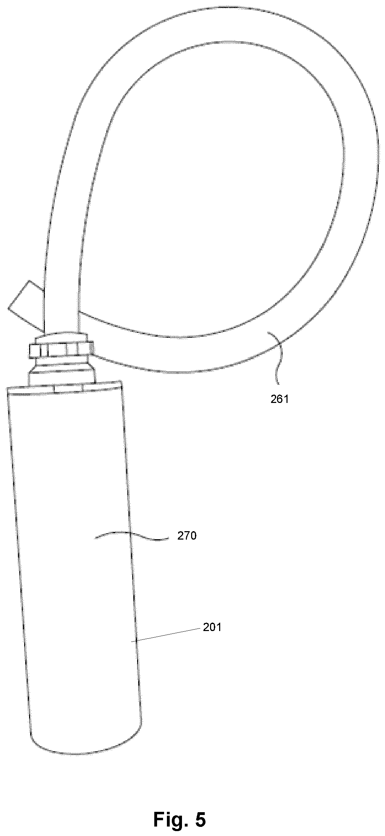

Each laser marking head 201-204 may comprise a compact arrangement of parallel galvanometer scanners (or "galvo mirrors") for directing laser light 211-214 to a desired location with marking fields of the laser marking heads as described in international patent application WO2019/101887. Each laser marking head 201-204 may not include an optical isolator. The optical isolators may be separate from the respective laser marking heads 201-204 as described in international patent application PCT/EP2020/076195. The laser marking heads 201-204 may be substantially identical (i.e. comprising substantially the same components). The internal workings of the laser marking heads 201-204 is described in greater detail below with respect to Figs. 5-7.

The laser marking system 200 may comprise a plurality of processors (not shown). Each processor may be configured to control the galvo mirrors of a respective laser marking head 201-204 based on the laser marking vectors. Each processor may form part of a respective controller 231-234. Each controller 231-234 may form a part of a respective unit 241-244. Each unit 241-244 may comprise a respective laser source 251-254. Each laser source 251-254 may be configured to generate a respective beam of laser light 211-214. Each controller 231-234 may be configured to control a respective laser source 251-254. Each unit 241-244 may be connected to a respective laser marking head 201-204 via a respective connector 261-264. Each connector 261-264 is configured to transmit a respective beam of laser light 211-214 from a respective laser source 251-254 to a respective laser marking head 201-204. Each connector 261-264 is configured to transmit a control signal from a respective controller 231-234 to a respective laser marking head 201-204 for controlling the galvo mirrors of the respective laser marking head 201-204.

In the example of Fig. 2, each of the laser marking heads 201-204 is configured to mark part of a message on every product 220-224. Unmarked products 220 approach the first laser marking head 201. As the unmarked products 220 pass through a marking field of the first laser marking head 201, the first laser making head marks the products to form products comprising a first portion of the message 221. The products comprising the first portion of the message 221 then move into a marking field of the second laser marking head 202. As the products comprising a first portion of the message 221 pass through the marking field of the second laser marking head 202, the second laser making head marks the products to form products comprising first and second portions of the message 222. The products comprising the first and second portions of the message 222 then move into a marking field of the third laser marking head 203. As the products comprising the first and second portions of the message 222 pass through the marking field of the third laser marking head 203, the third laser making head marks the products to form products comprising first, second and third portions of the message 223. The products comprising the first, second and third portions of the message 223 then move into a marking field of the fourth laser marking head 204. As the products comprising the first, second and third portions of the message 223 pass through the marking field of the fourth laser marking head 204, the fourth laser making head marks the products to form products comprising the entire message 224.

Alternatively or in addition to different laser marking heads 201-204 marking different portions of a message on the products 220-224, the first laser marking head 201 may be configured to perform a first material treatment of the products 220-224 and the second, third and/or fourth laser marking heads 202-204 may be configured to perform a different material treatment of the products 220-224. For example, the first material treatment may involve pre-treating (e.g. heating) the products 220-224 and the second material treatment may involve marking the pre-treated regions of the products 220-224. The pre-treatment itself may comprise multiple different material treatments performed by different laser marking heads. For example, a first pre-treatment may involve a first laser marking head 201 pre-heating an area of a product 220 that is to be marked. A second pre-treatment may involve a second laser marking head 202 laser engraving a message on the pre-heated are of the product 221. A third pre-treatment may involve a third laser marking head 203 polishing the engraved message on the product 222. A subsequent material treatment may involve a fourth laser marking head 204 marking the polished message on the product 222, 223, e.g. to provide the message with a desired font or visual effect (e.g. a shadow border effect). In the foregoing example, the marking content of the first, second and third pre-treatments and the subsequent material treatment is substantially the same. That is, the laser beams from each laser marking head 201-204 are directed to the same portions of the products 220-224. However, the provision of laser power may differ between the different pre-treatments and/or material treatments to achieve different effects in the material. Alternatively, the marking content of the first and second material treatments may be different. For example, the first material treatment may comprise engraving the products 220-224 with a first message and the second material treatment may comprise marking the products 220-224 with a different message. The marking content of the first and second material treatments may be substantially the same. The different material treatments may be understood as being an example of different portions of a message. That is, for example, the first laser marking head 201 may perform a first material treatment comprising engraving the products and the engraving may be considered a first portion of a message, and the second laser marking head 202 may perform a second material treatment comprising marking the products and the marking may be considered a second portion of the message. Any of the controllers 231-234 may be configured to adjust an output power of their associated laser marking head 201-204.

The laser marking system 200 may be a variable focal length laser marking system, wherein different laser making heads are configured to mark the products 220-224 at different focal lengths. If any of the products 220-224 comprise a surface to be marked that varies in height relative to the laser marking heads 201-204 so-called "shadow zones" may exist. Such shadow zones may not be reached by a fixed focus of one or more of the laser marking heads 201-204. However, the shadow zones can be marked at the same or a different time by another laser marking head having a different focal length suitable for marking the shadow zones. Preferably, at least one of the laser marking heads 201-204 comprises a dynamically adjustable focal distance. That is, at least one of the laser marking heads 201-204 may comprise optics configured to adjust a focal distance of the laser marking head during use. A single laser marking head may comprise a dynamically adjustable focal distance whilst the remaining laser marking heads comprise a fixed focal distance. Alternatively, a single laser marking head may comprise a fixed focal distance whilst the remaining laser marking heads each comprise a dynamically adjustable focal distance. In general, any combination of one or more laser marking heads having a fixed focal distance and one or more laser marking heads having a dynamically adjustable focal distance may be used. It may be preferable for only a single laser marking head to have a dynamically adjustable focal distance, with the remaining laser marking heads having a fixed focal distance. This advantageously achieves the benefit of being able to address and mark shadow zones on products whilst also avoiding an overly complex and/or costly laser marking system.

The first controller 231 may act as a leader and determine which portions of the message are to be marked on the products 220-224 by different laser marking heads 201-204. The second, third and fourth laser marking heads 202-204 may act as followers by receiving marking instructions from the first controller 231. There are different ways in which the first controller 231 can determine which portions of the message are to be marked on the products 220-224 by different laser marking heads 201-204. Alternatively, the laser marking heads 201-204 may be daisy-chained in a laser marking head sequence for sequential marking of the products 220-224. Each laser marking head 201-204 may comprise an input port (not shown) and an output port (not shown), such as Ethernet ports. The laser marking heads 201-204 may be daisy-chained via connectors (not shown) connecting an output port of one laser marking head 201 to an input port of the next laser marking head 202 in the laser marking head sequence (e.g. the connectors may be Ethernet cables travelling between the Ethernet ports of the laser marking heads 201-204).

When the laser marking heads 201-204 are daisy-chained, the first controller 231 may be configured to receive the data 205 indicating information to be marked on the product and generate a portion of the laser marking vectors based upon the received data 205. The first controller 231 may be further configured to control the first laser marking head 201 based on the generated portion of laser marking vectors and the detector signal 245 and also produce, as an output signal, a signal indicative of a remaining portion of the data indicative of information to be marked on the products 221. The second controller 232 may be configured receive the signal indicative of a remaining portion of the data and to generate remaining laser marking vectors based upon the received signal and control the second laser marking head 202 based on the remaining laser marking vectors and the detector signal 245. The first controller 231 may be configured to receive product speed information and use the product speed information and the detector signal 245 to determine whether the first laser marking head 201 has enough time to print a laser marking vector on the products 221. If the first controller 231 determines that the first laser marking head 201 does not have enough time to print the laser marking vector, the first controller 231 may stop the first laser marking head 201 from marking the product 221 and pass the laser marking vector to the second controller 232 as part of the output signal. The second controller 232 may then control the second laser marking head 202 to mark the product 222 at least partially based on the output signal.

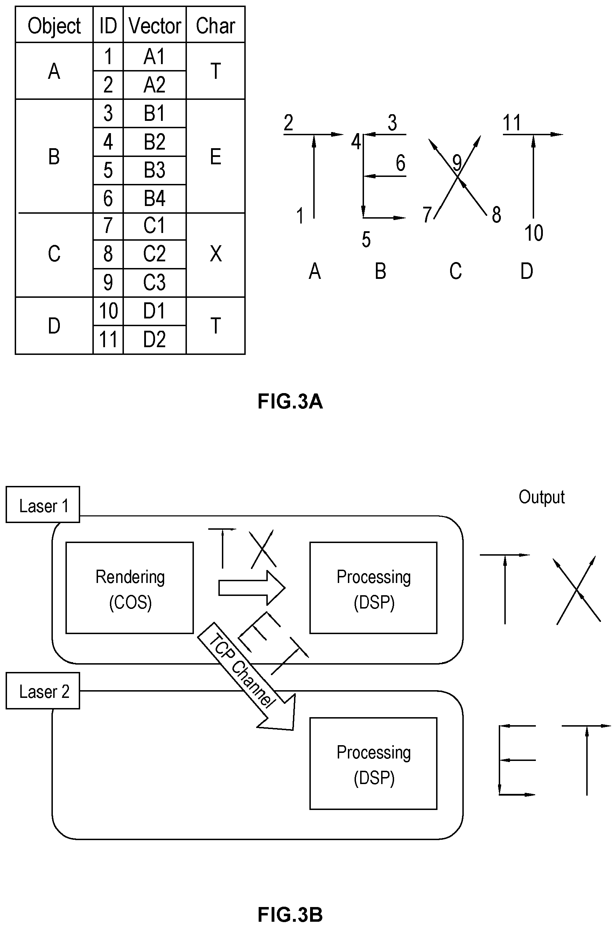

Fig. 3A shows an example of how the information to be marked on a product may be used to generate sub-sets of laser making vectors. In the example of Fig. 3A, the information to be marked on the product is the word "TEXT", and the data indicating information to be marked on the product is split into sub-sets A-D of data corresponding to different characters of the word "TEXT". A first sub-set A of the data is used to generate a first sub-set of laser marking vectors A1, A2 that together form the character "T". A second sub-set B of the data is used to generate a second sub-set of laser marking vectors B1-B4 that together form the character "E". A third sub-set C of the data is used to generate a third sub-set of laser marking vectors C1-C3 that together form the character "X". A fourth sub-set D of the data is used to generate a fourth sub-set of laser marking vectors D1, D2 that together form the character "T".

With reference to both Fig. 2 and Fig. 3A, in a first leader-follower arrangement the first controller 231 may be configured to receive the data 205 indicating information to be marked on the products 220-224. The first controller 231 may generate the laser marking vectors A1-D2 based on the data 205 and determine a first subset of laser marking vectors A1, A2 to retain. The first controller 231 may be configured to determine second, third and fourth sub-sets of the laser marking vectors B1-B4, C1-C3, D1-D2 to provide to the second, third and fourth controllers 232-234 respectively. The first controller 231 may provide the second sub-set of laser marking vectors B1-B4 to the second controller 232, the third sub-set of laser marking vectors C1-C3 to the third controller 233 and the fourth sub-set of laser marking vectors D1-D2 to the fourth controller 234. The controllers 231-234 may be configured to control their respective laser marking heads 201-204 at least partially based on the respective sub-sets of laser marking vectors A1-A2, B1-B4, C1-C3, D1-D2.

In a second leader-follower arrangement, the first controller 231 may be configured to receive the data 205 indicating information to be marked on the products 220-224. The first controller 231 may determine a first sub-set A of the data 205 to retain. The first controller 231 may be configured to determine second, third and fourth sub-sets B, C, D of the data to provide to the second, third and fourth controllers 232-234 respectively. The first controller 231 may provide the second sub-set of data B to the second controller 232, the third sub-set of data C to the third controller 233 and the fourth sub-set of data D to the fourth controller 234. The first controller 231 may be configured to generate a first sub-set of the laser marking vectors A1-A2 based on the first sub-set of data A, and control the first laser marking head 201 at least partially based on the first sub-set of the laser marking vectors A1-A2. The second, third and fourth controllers 232-234 may be configured to generate second, third and fourth sub-sets of laser marking vectors B1-B4, C1-C3, D1-D2 based on the respective sub-sets of the data B, C, D provided by the first controller 231. The second, third and fourth controllers 232-234 may be configured to control the second, third and fourth laser marking heads 202-204 respectively at least partially based on the respective sub-sets of laser marking vectors B1-B4, C1-C3, D1-D2.

In a third leader-follower arrangement, the first controller 231 may be configured to receive the data 205 indicating information to be marked on the products 220-224 and determine a first sub-set A of the data 205 to be marked by the first laser marking head 201. The first controller 231 may be configured to determine second, third and fourth sub-sets B, C, D of the data 205 to be marked by the second, third and fourth controllers 232-234 respectively. The first controller 231 may allocate the second sub-set of data B to be marked by the second laser marking head 202, the third sub-set of data C to be marked by the third laser marking head 203 and the fourth sub-set of data D to be marked by the fourth laser marking head 204. The first controller 231 may be configured to generate a first sub-set of the laser marking vectors A1-A2 based on the first sub-set of the data A. The first controller 231 may be configured to generate second, third and fourth sub-sets of the laser marking vectors B1-B4, C1-C3, D1-D2 based on the second, third and fourth sub-sets B, C, D of the data 205. The first controller 231 may be configured to control the first laser marking head 201 at least partially based on the first sub-set of laser marking vectors A1-A2. The first controller 231 may be configured to provide the second sub-set of laser marking vectors B1-B4 to the second controller 232, the third sub-set of laser marking vectors C1-C3 to the third controller 233 and the fourth sub-set of laser marking vectors D1-D2 to the fourth controller 234. The second, third and fourth controllers 202-204 may be configured to control the second, third and fourth laser marking heads 202-204 respectively at least partially based on the respective sub-sets of the laser marking vectors B1-B4, C1-C3, D1-D2 provided by the first controller 231.

In any of the abovementioned leader-follower arrangements, the sub-sets of laser marking vectors A1-D2 may be the same. For example, the first and fourth sub-sets of laser marking vectors A1-A2, D1-D2 are the same and both act to mark the character "T" on a product. In any of the abovementioned leader-follower arrangements, the sub-sets of laser marking vectors A1-A2, B1-B4, C1-C3, D1-D2 may be different. For example, the first sub-set of laser marking vectors A1-A2 acts to mark the character "T" on a product, whereas the second sub-set of laser marking vectors B1-B4 act to mark the character "E" on the product. Thus, the first and second sub-sets of laser marking vectors A1-A2, B1-B4 are different and correspond to different characters of the text to be marked on the product. Alternatively or additionally, different sub-sets 206-208 of the data 205 may correspond to different parts of characters and/or different lines of text to be marked on the products 220-224. The different sub-sets 206-208 of the data 205 may form part of a single image or single message to be marked on the products 220-224. Alternatively or additionally, different sub-sets of laser marking vectors 206-208 are generated by the first controller 231 based on received data 205 may be provided to the respective controllers 232-234. Alternatively or additionally, the information 206-208 provided by the first controller 231 to the other controllers 232-234 may comprise different and/or additional components compared to the data 205 received by the first controller 231. For example, the information 206-208 may comprise information generated by the first controller 231 that did not form part of the data 205 received by the first controller 231.

Fig. 3B shows an example of how the information to be marked on a product of Fig. 3A may be split between two laser marking heads according to an aspect of the present disclosure. The example of Fig. 3B corresponds to the laser marking system 200 of Fig. 2 after two of the laser marking heads and associated controllers are deactivated and/or removed from the laser marking system 200 such that only two laser marking heads and their associated controllers remain active. Regarding the known laser marking system 100 of Fig. 1, deactivating and/or removing two laser marking heads 103, 104 would require a reconfiguration of the shared housing 108 along with a complex and time-consuming reconfiguration of the central controller 130. As previously discussed, the laser marking system 200 of the present disclosure is modular with each laser marking head 201-204 having its own associated controller 231-234. Thus, removing one or more laser marking heads and associated controllers from the laser marking system 200 of the present disclosure is a simple process compared to the known laser system 100 of Fig. 1.

As was the case in Fig 3A, in the example of Fig. 3B, the information to be marked on the product is the word "TEXT". As such, the laser marking vectors A1-D2 correspond to those described above and shown in Fig. 3A. In accordance with the first leader-follower arrangement described above, the first controller 231 may be configured to receive the data 205 indicating information to be marked on the products 220-224. The first controller 231 may generate the laser marking vectors A1-D2 based on the data 205 and determine a first subset of laser marking vectors A1-A2, C1-C3 to retain. Generating the laser marking vectors may involve rendering the laser marking vectors based on the data 205. In the example of Fig. 3B, the first sub-set of laser marking vectors A1-A2, C1-C3 corresponds to the characters "T" and "X". The first controller 231 may be configured to determine a second sub-set of the laser marking vectors B1-B4, D1-D2 to provide to the second controller 232. In the example of Fig. 3B, the second sub-set of laser marking vectors B1-B4, D1-D2 corresponds to the characters "E" and "T". The first controller 231 may provide the second sub-set of laser marking vectors B1-B4, D1-D2 to the second controller 232 via a data channel such as a transmission control protocol ("TCP") channel. The first and second controllers 231, 232 may be configured to control their respective laser marking heads 201, 202 at least partially based on the respective sub-sets of laser marking vectors A1-A2, C1-C3, B1-B4, D1-D2. The first and second controllers 231, 232 may be configured to control their respective laser 251, 252 at least partially based on the respective sub-sets of laser marking vectors A1-A2, C1-C3, B1-B4, D1-D2.

A first processor associated with the first controller 201 may receive the first sub-set of laser marking vectors A1-A2, C1-C3 and process the first sub-set of laser marking vectors (e.g. using digital signal processing) to convert the first sub-set of laser marking vectors into a first control signal for the galvo mirrors of the first laser marking head 201. The first control signal causes the galvo mirrors of the first laser marking head 201 to deflect the first laser light 211 to form the characters "T" and "X" on the products 221. The first and second controllers 231, 232 may be configured to control their associated laser sources 251, 252 at least partially based on the respective sub-sets of laser marking vectors A1-A2, C1-C3, B1-B4, D1-D2. A second processor associated with the second controller 202 may receive the second sub-set of laser marking vectors B1-B4, D1-D2 and process the second sub-set of laser marking vectors (e.g. using digital signal processing) to convert the second sub-set of laser marking vectors into a second control signal for the galvo mirrors of the second laser marking head 202. The second control signal causes the galvo mirrors of the second laser marking head 202 to deflect the second laser light 212 to form the characters "E" and "T" on the products 222.

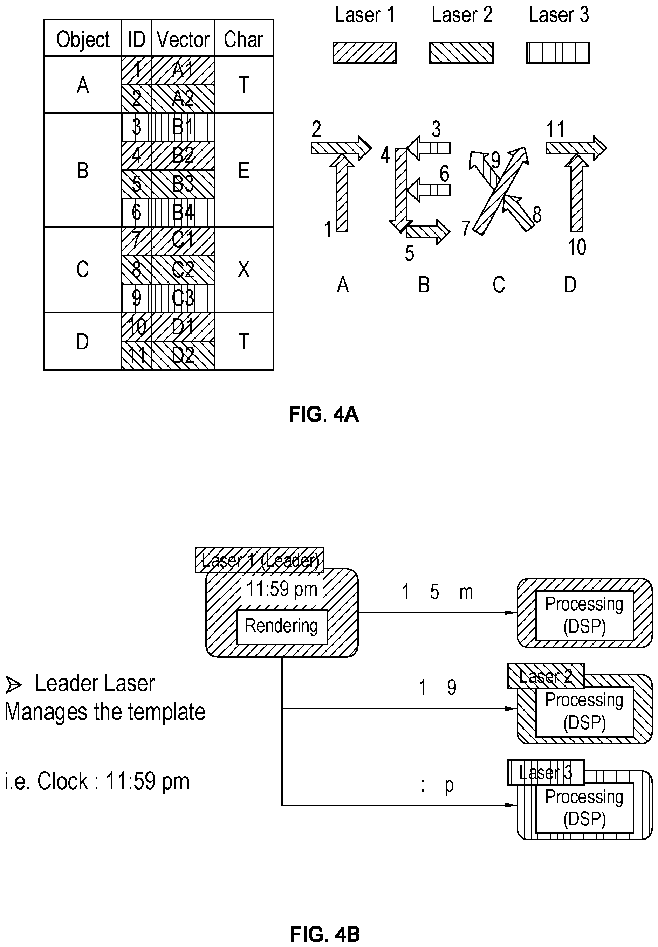

Fig. 4A shows an example of how the information to be marked on a product of Fig. 3A may be split between three laser marking heads according to an aspect of the present disclosure. The example of Fig. 4A corresponds to the laser marking system 200 of Fig. 2 after one of the laser marking heads 204 and its associated controller 234 is deactivated and/or removed from the laser marking system 200 such that only three laser marking heads 201-203 and their associated controllers 231-233 remain active. As was the case in Fig 3A, in the example of Fig. 4A, the information to be marked on the product is the word "TEXT". As such, the laser marking vectors A1-D2 correspond to those described above and shown in Fig. 3A. However, the laser marking vectors A1-D2 are distributed amongst the controllers 231-233 in a different manner.

In accordance with the first leader-follower arrangement described above, arrangement the first controller 231 may be configured to receive the data 205 indicating information to be marked on the products 220-224. The first controller 231 may generate the laser marking vectors A1-D2 based on the data 205 and determine a first subset of laser marking vectors A1, B2, C1, D1 to retain. In the example of Fig. 4A, the first controller 231 distributes the laser marking vectors A1-D2 amongst the controllers 231-233 such that a sequence of laser marking vectors A1-D2 corresponds to a sequence of the laser marking heads 231-233. That is, the first laser marking vector A1 is retained by the first controller 231, the second laser marking vector A2 is provided to the second controller 232, the third laser marking vector B1 is provided to the third controller 233. The distribution process then repeats with the fourth laser marking vector B2 being retained by the first controller 231, the fifth laser marking vector B3 being provided to the second controller 232, etc. As such, a second sub-set of laser marking vectors A2, B3, C2, D2 is provided to the second controller 232 and a third sub-set of laser marking vectors B1, B4, C3 is provided to the third controller 233. The controllers 231-233 may be configured to control their respective laser marking heads 201-203 at least partially based on the respective sub-sets of laser marking vectors to form the word "TEXT" on the products 220-224.

Fig. 4B shows an example of how a leader controller may be used to generate dynamic information to be marked on a product according to an aspect of the present disclosure. The example of Fig. 4B follows on from that of Fig. 4A. The first controller 231 is configured to generate a sub-set of the data indicating information to be marked on the products. The sub-set of data generated by the first controller 231 represents dynamic information comprising a time stamp that is to be marked on the products. The first controller 231 may be linked to an internal clock of a production line of which the laser marking system forms a part. The first controller 231 may receive the current time from the internal clock and use the current time to generate the sub-set of the data. In the example of Fig. 4B, the time stamp generated by the first controller 231 reads "11:59 PM". Alternatively or additionally, the dynamic information may comprise any information that changes during marking of the products such as a date, a serial number, etc.

In accordance with the first leader-follower arrangement, the first controller 231 is configured to generate laser marking vectors based on the generated sub-set of data. In contrast to the dynamic information of the current time, once generated, the laser marking vectors are static. That is, whilst the current time measured by the internal clock is continuously changing, once generated, the laser marking vectors do not change. This advantageously avoids the need for content synchronization between the dynamic information and the laser marking heads 201-203. That is, without converting dynamic information into static laser marking vectors, one or more of the controllers 201-204 may fall out of synchronisation with the dynamic information and/or each other that may lead to the generation of incorrect sub-sets of a timestamp. As a first example, the first controller 231 may generate a first portion of a timestamp and the second controller 232 may generate a second portion of the timestamp. However, if the second controller 232 experiences any lag, the second controller 232 may generate out-of-date information relative to the internal clock and/or the first portion of the timestamp generated by the first controller 231. Thus, the total timestamp marked on the product may be inaccurate. As another example, if there is a delay between laser marking vector generation between the first and second controllers 232, 232, the total timestamp marked on the product may again be inaccurate. The first controller 231 determines a first sub-set of the laser marking vectors to retain. In the example of Fig. 4B, the first sub-set of laser marking vectors correspond to the characters "1", "5" and "m". The first controller 231 determines second and third sub-sets of the laser marking vector to provide to the second and third controllers 232, 233. The second sub-set of laser marking vectors corresponds to the characters "1" and "9" and are provide to the second controller 232. The third sub-set of laser marking vectors correspond to the characters ":" and "p" and are provided to the third controller 233. The controllers 231-233 are configured to control their associated laser marking heads 201-203 at least partially based on the respective sub-sets of the laser marking vectors such that the current time "11:59 pm" is marked on the product. The first controller 231 may receive a message comprising both static and dynamic fields. For example, the static field may comprise text stating "Best before" and the dynamic field may comprise a best before date that is to be determined by the first controller 231. The first controller 231 may determine the best before date by, for example, adding a fixed number of days to a current date determined by the internal clock.

As demonstrated above with reference to Figs. 2-4B, the laser marking system 200 of the present disclosure offers a modular, versatile and highly adaptable solution whilst reducing or removing the need for the complex reconfigurations required of the known laser marking system 100 shown in Fig. 1. The laser marking system 200 provides further advantages due to the small form factor of the laser marking heads 201-204 that are described in greater detail below with references to Figs. 5-7.

Fig. 5 schematically depicts the first laser marking head 201 of Fig. 2. The laser marking head 201 comprises a cylindrical housing 270. The cylindrical housing 270 may have a diameter of about 40 mm and a length of about 200 mm. The cylindrical housing 270 may have substantially similar dimensions as the marking head of a model 1860 continuous inkjet printer available from Videojet Technologies Inc., Wood Dale, IL. The cylindrical shape of the housing 270 advantageously makes the housing easy to support, e.g. using a simple clamp mechanism. The cylindrical shape of the housing 270 advantageously makes the housing easy to integrate or retrofit into production lines by, for example, cutting a circular aperture in a support structure of a production line. A flexible umbilical cord 261 may be coupled to the housing 270 and may include power and signal lines to provide power to and control drive mechanisms (not shown).

The umbilical cord 261 may also include a light waveguide, for example, a fibre optic cable to carry a laser beam from an external laser beam generator into the housing 270. The umbilical cord 261 is an example of a connector 261 as shown in Fig. 2. Alternatively, a laser beam generator may be disposed within the housing 270 with the other components. The cylindrical housing 270 and enclosed components may form a laser marking head or a scanning head for a laser marking system. A lower end of the housing 270 may be sealed by an optically transparent window to keep debris from entering the housing 270. The housing 270 may comprise a straight portion and a bended portion (not shown) extending at an angle from the straight portion such that radiation exits the housing 270 at an angle that is substantially perpendicular to the straight portion of the housing 270. The flexible umbilical 261 may advantageously allow easy movement of the marking head 201 thereby further increasing the range of applications and installation environments in which the marking head 201 may be used. A laser marking head 201 as disclosed herein may weigh about 0.5 kg, about one-tenth the weight of many existing systems. The form factor, size, and weight of aspects and embodiments of the laser marking system disclosed herein provide for the disclosed laser scanner/marker system to be more easily manipulated.

The laser marking head 201 may comprise an inlet for receiving a fluid (not shown). The laser marking head 201 may comprise a cavity (not shown) for enclosing at least one component for controlling the optical path of the radiation beam within the laser marking head 201 (e.g. galvo mirrors of the laser marking head). The laser marking head 201 may comprise an outlet for the fluid (not shown). The laser marking head 201 may comprise a first channel (not shown) defining a first fluid path from the inlet to the cavity. The laser marking head 201 may comprise a second channel (not shown) defining a second fluid path from the cavity to the outlet. The at least one component for controlling the optical path of the radiation beam may be enclosed within the cavity. The housing and the at least one component may further define a third channel between the first channel and the second channel. The first channel, second channel and third channel may be configured to isolate the fluid from the optical path of the radiation beam within the laser marking head 201. The third channel therefore defines a fluid path through the cavity and around an outer surface of the component.

When cooling fluid such as compressed air is received by the housing and flows through the third channel, the cooling fluid passes over the component to cool it. The housing may be provided with a cavity designed to enclose a component of the marking head responsible for generating most of the heat residing in the laser marking head, particularly an actuator for controlling the position of the galvo mirrors that direct the radiation beam through the laser marking head 201. By directing the cooling fluid to this particular component, the cooling provided will have a greater effect on reducing the overall temperature of the laser marking head 201. In addition, the cavity and the first and second channels may be arranged such that the third channel is created by the provision of just the housing and the component itself. Since the third channel is created by the provision of the component itself, the third channel must enclose an outer surface of the component, where it is intended to provide the cooling. This reduces the number of parts required for cooling the component. The housing enables this cooling to take place whilst isolating the cooling fluid from the optical path of the radiation beam to prevent any interference with the radiation beam, and so to therefore prevent any complications that may arise due to any such interference. The housing therefore provides an efficient path for cooling fluid, particularly compressed air, to pass from the inlet, over the component to be cooled, and towards the outlet to dissipate the heat within the laser marking head 201. As such, the housing therefore provides for an improved cooling system for a laser marking head 201 for a laser marking system, which allows components of the laser marking head to be placed closer together within the laser marking head without overheating. Since components of the laser marking head 201 can be placed closer together, the housing and therefore laser marking head can be made more compact.

The housing may comprise a second cavity for enclosing at least one second component for controlling the optical path of the laser beam within the laser marking head 201. The housing may define a fourth channel defining a fluid path from the third channel to the second channel. The fourth channel may be fluidly connected to the second cavity. The first channel, second channel, third channel and fourth channel may be configured to isolate the fluid from the optical path of the radiation beam within the laser marking head 201. This arrangement may provide a particularly effective cooling system for a laser marking head 201. The actuators for controlling the optical path of the laser beam through the laser marking head 201 may operate at very high frequencies, generating significant amounts of heat. By providing a housing able to direct fluid to both actuators, a greater cooling effect may be achieved. This may be particularly effective when the laser marking head 201 has a parallel actuator configuration as the laser marking head 201 may be made more compact, the actuators may be placed closer together and so enhanced cooling may be required.

The second cavity may be configured to enclose the at least one second component for controlling the optical path of the radiation beam within the laser marking head 201. When the at least one second component for controlling the optical path of the radiation beam is enclosed within the second cavity, the housing and the at least one second component may define a fifth channel between the fourth channel and the second channel. The first channel, second channel, third channel, fourth channel and fifth channel may be configured to isolate the fluid from the optical path of the radiation beam within the laser marking head 201. Since the fifth channel may be created by the provision of the component itself, the fifth channel must enclose an outer surface of the component, where it is intended to provide the cooling. This may reduce the number of parts required for cooling the component. The fifth channel may therefore define a fluid path through the second cavity and around the outer surface of the second component. When cooling fluid such as compressed air is received by the housing and flows through the fifth channel, the cooling fluid passes over the second component to cool it. The first cavity may define a first longitudinal axis and the second cavity may define a second longitudinal axis. The first longitudinal axis may be substantially parallel to the second longitudinal axis and/or to a longitudinal axis of the laser marking head 201. This may provide for a parallel actuator configuration as mentioned above, where the actuators may be placed closer together and so enhanced cooling may be required. The third channel may extend around an entire circumference of the at least one first component. The fifth channel may extend around an entire circumference of the at least one second component.

The outlet may be fluidly connected to a guide portion and the guide portion may be arranged to receive fluid from the outlet and to direct the fluid at a predetermined angle relative to and across an optical element through which radiation is emitted from the laser marking head 201. The guide portion may be arranged to receive fluid from the outlet and to direct the fluid at a predetermined angle relative to a plane comprising an optical element of the laser marking head 201 through which radiation is emitted from the laser marking head, and towards the emitted radiation. Towards may be used to mean "in the direction of". The guide portion may therefore be used to provide an effective air knife, for example across the optical element through which radiation is emitted from the laser marking head 201. Across may mean towards the emitted radiation. This may prevent particulate matter deflecting back up and onto the optical element for example, and/or may help dissipate harmful and/or unpleasant fumes produced by projecting the beam onto a product. The cooling system may therefore have a dual purpose in that the fluid can be used for cooling, as well as for the generation of an effective air knife at the outlet. The predetermined angle may be relative to a plane comprising the outlet. The outlet may comprise a valve. This may help prevent particulate matter entering the housing through the outlet.

The guide portion may comprise at least one surface arranged at the predetermined angle. The at least one surface may be arranged to receive fluid from the outlet and to direct the fluid at the predetermined angle relative to and across an optical element through which radiation is emitted from the laser marking head 201. Across may mean towards the emitted radiation. The inventors have found that this may be a simple but effective way of generating an air knife at the outlet. Turbulence surrounding the air knife may be minimized when the air knife is generated in this way. The laser marking head 201 may define a longitudinal axis, and the laser marking head may be configured to direct a radiation beam out of the laser marking head in a direction substantially parallel to the longitudinal axis. The predetermined angle may be substantially 45 degrees relative to a plane comprising an optical element through which radiation is emitted from the laser marking head 201. The inventors have found that this angle may generate a very effective air knife for a laser marking head 201 with a straight configuration. The turbulence surrounding the air knife may be minimized when the air knife is generated in this way. This reduces the chance of a turbulent airflow being generated that might direct particulate matter onto the optical element. The predetermined angle may be between 40 and 50 degrees relative to a plane comprising the optical element through which radiation is emitted from the laser marking head 201. The laser marking head 201 may define a longitudinal axis. The laser marking head 201 may be configured to direct a radiation beam out of the laser marking head 201 in a direction substantially transverse to the longitudinal axis. The predetermined angle may be substantially 60 degrees relative to a plane comprising an optical element through which radiation is emitted from the laser marking head 201. This may correspond to an angle of 30 degrees relative to the optical axis of the laser marking head 201 where the radiation beam is emitted from the laser marking head. The inventors have found that this angle may generate a very effective air knife for a head with a right-angled or 90 degree configuration. The turbulence surrounding the air knife may be minimized when the air knife is generated in this way.

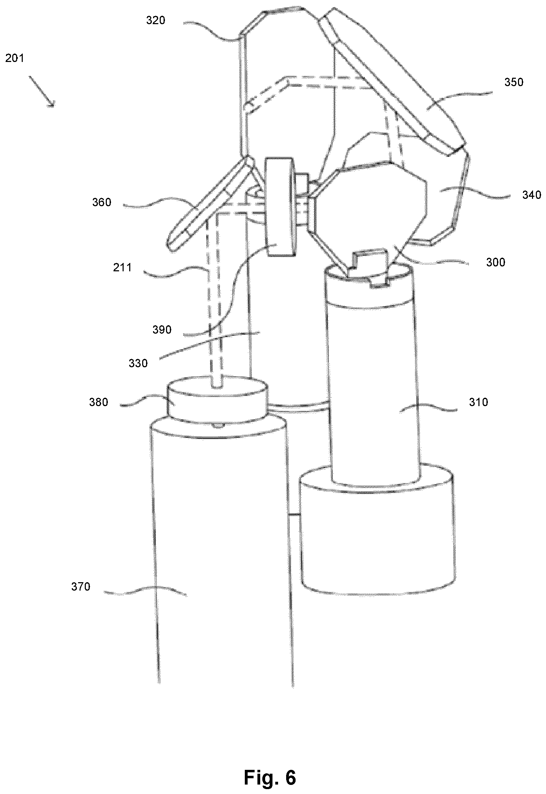

FIG. 6 schematically depicts an internal view of the laser marking head 201 of FIG. 5. The laser marking head 201 comprises an electromagnetic radiation steering mechanism comprising a first optical element 300 having an associated first actuator 310 configured to rotate the first optical element 300 about a first rotational axis to change a first coordinate of a first steering axis in a two dimensional field of view. The electromagnetic radiation steering mechanism further comprises a second optical element 320 having an associated second actuator 330 configured to rotate the second optical element 320 about a second rotational axis to change a second coordinate of a second steering axis in the two dimensional field of view. The first optical element 300 comprises a first reflective surface configured to receive and reflect electromagnetic radiation 211 and the second optical element 320 comprises a second reflective surface configured to receive and reflect the electromagnetic radiation 211. In the example of Fig. 6, the first rotational axis and the first reflective surface are substantially parallel, and the second rotational axis and the second reflective surface are substantially parallel. The two actuators 310, 330 may be placed as closely as possible to each other (a minimal distance between the two rotation axes of the drive mechanisms). The closer the two actuators 310, 330 may be placed, the smaller the mirror 320 of the second drive mechanism 330 may be. The two actuators 310, 330 may be displaced on their rotation axes relative to each other.

Each of the first and second steering axes may be referred to as a deflection axis or a deflection degree of freedom. This is because each optical element 300, 320 may be configured to deflect the electromagnetic radiation 211 and thereby change a propagation direction and/or orientation of the electromagnetic radiation 211. The two deflection degrees of freedom associated with the first and second optical elements 300, 320 may combine to address specific locations within the two dimensional field of view about which the electromagnetic radiation 211 may be steered. The two dimensional field of view may correspond to an imaginary plane at a fixed distance from the electromagnetic radiation steering mechanism onto which the electromagnetic radiation 211 is projected. For example, the two dimensional field of view may be substantially coplanar with a portion of a surface of a product that is to be marked using the electromagnetic radiation 211. The two dimensional field of view of the laser marking head 201 may be referred to as a marking field of the laser marking head 201.

A size of the two dimensional field of view may at least partially depend upon a distance between an output aperture of the electromagnetic radiation steering mechanism and a surface upon which the electromagnetic radiation 211 is steered. For example, a distance between the output of the laser marking head 201 and the product to be marked may be about 10 mm or more. For example, a distance between the output of the laser marking head 201 and the product to be marked may be about 1000 mm or less. The two dimensional field of view may, for example, have dimensions of about 10 mm by about 20 mm or more. The two dimensional field of view may, for example, have dimensions of about 1000 mm by about 2000 mm or less. A displacement of the electromagnetic radiation within the two dimensional field of view that is caused by rotation of the first optical element 300 and/or the second optical element 320 may be determined using trigonometry with knowledge of the angle by which the first optical element 300 and/or the second optical element 320 was rotated and knowledge of the focal distance between the electromagnetic radiation steering mechanism and the two dimensional field of view. Each actuator 310, 330 may, for example, be configured to rotate each optical element 300, 320 by about ± 20°.

The electromagnetic radiation steering mechanism further comprises an electromagnetic radiation manipulator 340, 350 optically disposed between the first and second optical elements 300, 320. The first optical element 300 is configured to receive electromagnetic radiation 1211 and direct the electromagnetic radiation 211 to the electromagnetic radiation manipulator 340, 350. The electromagnetic radiation manipulator 340, 350 is configured to direct the electromagnetic radiation 211 to the second optical element 320. The second optical element 320 may be configured to direct the electromagnetic radiation 211 to an optical output of the electromagnetic radiation steering mechanism. In alternative arrangements, the first optical element 300 and its associated actuator 310 may be substantially perpendicular to the second optical element 320 and its associated actuator 330, and the electromagnetic radiation manipulator 340, 350 may not be present.

The electromagnetic radiation manipulator comprises a first mirror 340 and a second mirror 350. The first mirror 340 is configured to receive the electromagnetic radiation 211 after the electromagnetic radiation 211 has interacted with the first optical element 300 and direct the electromagnetic radiation 211 to the second mirror 350. The second mirror 350 is configured to receive the electromagnetic radiation 211 after the electromagnetic radiation 211 has interacted with the first mirror 340 and direct the electromagnetic radiation 211 to the second optical element 320. The first mirror 340 and the second mirror 350 are fixed with respect to each other. The first mirror 340 is arranged to apply about a 90° change in a propagation direction of the electromagnetic radiation 211. To achieve this, the first mirror 340 may be optically disposed at a 45° angle with respect to incident electromagnetic radiation 211. The second mirror 350 is arranged to apply about a 90° change in a propagation direction of the electromagnetic radiation 211. To achieve this, the second mirror 350 may be optically disposed at a 45° angle with respect to incident electromagnetic radiation 211. These changes in the propagation direction of the electromagnetic radiation 211 provide two orthogonal degrees of freedom for the beam deflection.

The electromagnetic radiation steering mechanism further comprises a third reflector 360. In known laser marking heads, and in the example of Fig. 5, the electromagnetic radiation 211 is turned by the third reflector 360 by 90° to hit the first optical element 300 of the first actuator 310. It will be appreciated that at various positions within the electromagnetic radiation steering mechanism the electromagnetic radiation 211 propagates in a direction that is not along an axis parallel to the first and second axes of rotation. The marking head further comprises a collimator 370 and focusing optics 380, 390. The collimator 370 may be configured to receive electromagnetic radiation 211 from a radiation source or optical fibre (not shown) and provide a beam of electromagnetic radiation 211 having substantially parallel rays. The focussing optics 380, 390 may be configured to receive electromagnetic radiation 211 provided by the collimator 370 and condition the electromagnetic radiation 211 in a desired way, e.g. to ensure the electromagnetic radiation 211 fits on to the first and second optical elements 300, 320.

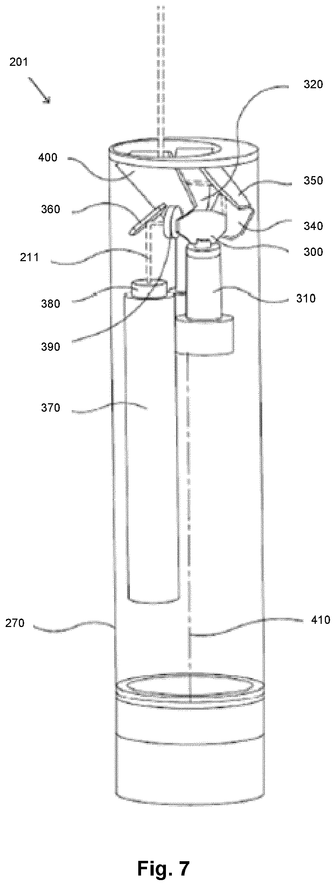

Fig. 7 shows a side view of the marking head 201 of Fig. 6. The electromagnetic radiation steering mechanism further comprises a fourth reflector 400. After the electromagnetic radiation 211 has reflected from the second optical element 320, the electromagnetic radiation 211 is turned by the fourth reflector 400 by 90°. The electromagnetic radiation 211 may then exit the electromagnetic radiation steering mechanism and be incident upon an object such as a product that is to be marked by the electromagnetic radiation 211. In the example of Fig. 6 and Fig. 7 the first rotational axis and the second rotational axes are substantially parallel and the electromagnetic radiation steering mechanism is installed substantially parallel to a length of the marking head of the laser marking system such that an axis 410 of the marking head 201 that is parallel to the length (i.e. the greatest of three dimensions) of the laser marking head 201 is substantially parallel to the first and second axes of rotation of the first and second optical elements 300, 320.

For example, the electromagnetic radiation 211 may have a beam diameter of about 2.5 mm when leaving the flexible umbilical 261 and entering the electromagnetic radiation steering mechanism. The laser marking head 201 may, for example be capable of marking products with about 2000 characters per second. The characters may have a height of about 2 mm. Proximate the location at which the electromagnetic radiation 211 exits the laser marking head 201 (i.e. before the electromagnetic radiation has travelled a distance corresponding to a focal length of the laser marking head) the electromagnetic radiation 211 may have a beam diameter of between about 5 mm and about 15 mm. Proximate the location to be treated (e.g. marked, engraved, etc.) on the product (i.e. after the electromagnetic radiation 211 has travelled a distance corresponding to a focal length of the laser marking head 201) the electromagnetic radiation 211 may have a diameter of between about 50 µm and about 300 µm. The laser marking head 201 may be controlled such that the electromagnetic radiation 211 has a different beam diameter and/or a different focal length for different material treatments of products. Electromagnetic radiation 211 may be provided to the laser marking head 201 by a radiation source such as, for example, a CO₂ laser or a diode laser. Referring to Fig. 5, the umbilical assembly 261 may be connected to the housing 270 of the laser marking head 201. An optical fibre of the umbilical assembly 261 may direct the radiation 211 to the collimator 370 in the laser marking head 201. The collimator 370 may condition the radiation 211 in a desired manner before directing the radiation 211 to focussing optics 380 for further conditioning as desired.

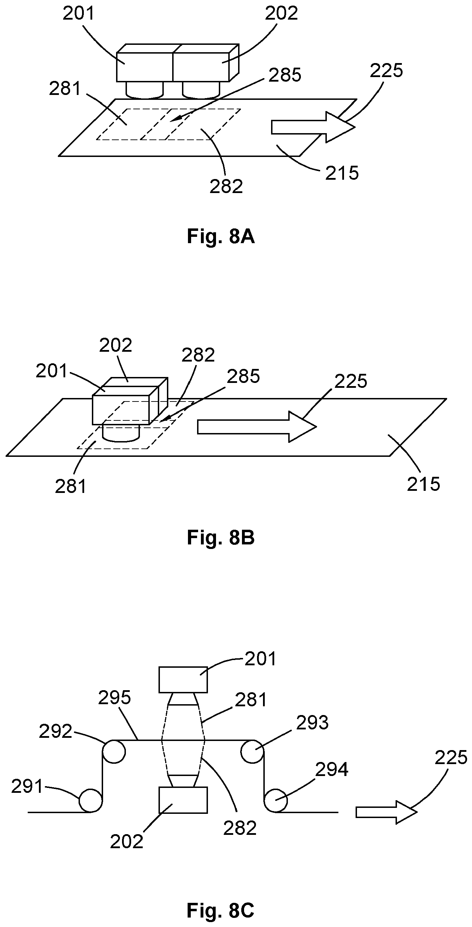

Fig. 8A schematically depicts a perspective view of a first arrangement of first and second laser marking heads 201, 202 having partially overlapping marking fields 281, 282 according to an aspect of the present disclosure. As previously discussed in relation to Figs. 6 and 7, the first laser marking head 201 has a first marking field 281 within which the first laser marking head 201 may steer laser light and the second laser marking head 282 has a second making field within which the second laser marking head may steer laser light. In the example of Fig. 8A, the first and second laser marking heads 201, 202 are arranged such that their respective marking fields 281, 282 partially overlap in a movement direction 225 of a product (not shown). The movement direction 225 of the product may correspond to a movement direction of a production line 215 (e.g., a conveyor belt) on which the product is supported. The first and second marking fields 281, 282 partially overlap to form a common marking field 285 within which both the first and second laser marking heads 201, 202 may steer laser light. The small form factor of the laser marking heads 201, 202 advantageously assists in allowing the laser marking heads 201, 202 to be arranged close together such that their marking fields 281, 282 partially overlap. Having at least partially overlapping marking fields offers a plurality of advantages. A first example advantage is that different material treatments of a product by different laser marking heads at substantially the same time and substantially the same location, thereby increasing a throughput of the production line. A second example advantage is that different laser marking heads having different focal lengths (and/or marking field sizes) may perform different material treatments within a shared marking field on a product. A third example advantage is that different material treatments of a product may be performed using substantially identical lasers and/or laser marking heads by using the controllers to set different laser parameters within a shared marking field on a product.

Fig. 8B schematically depicts a perspective view of a second arrangement of first and second laser marking heads 201, 202 having partially overlapping marking fields 281, 282 according to an aspect of the present disclosure. In the example of Fig. 8B, the first and second laser marking heads 201, 202 are arranged such that their respective marking fields 281, 282 partially overlap in a direction that is substantially perpendicular to a movement direction 225 of a product (not shown). The movement direction 225 of the product may correspond to a movement direction of a production line 215 (e.g., a conveyor belt) on which the product is supported. The first and second marking fields 281, 282 partially overlap to form a common marking field 285 within which both the first and second laser marking heads 201, 202 may steer laser light.

Fig. 8C schematically depicts a view from the side of a third arrangement of first and second laser marking heads 201, 202 having completely overlapping marking fields 281, 282 according to an aspect of the present disclosure. In the example of Fig. 8C, the first and second laser marking heads 201, 202 are arranged to oppose each other to mark a product 295 passing between the first and second laser marking heads 201, 202. In the example of Fig. 8C, the product 295 is a sheet of material. The sheet 295 is supported by rollers 291-294. The rollers 291-294 rotate such that the sheet 295 moves in a movement direction 225. The first laser marking head 201 is configured to mark a first side of the sheet 295 and the second laser marking head 202 is configured to mark an opposite side of the sheet 295.

The laser marking system of the present disclosure may be adapted for many different applications and many different production lines. For example, the laser marking system of the present disclosure may comprise different types of laser sources and/or different laser marking heads comprising different optical components and/or having different shapes and/or sizes.

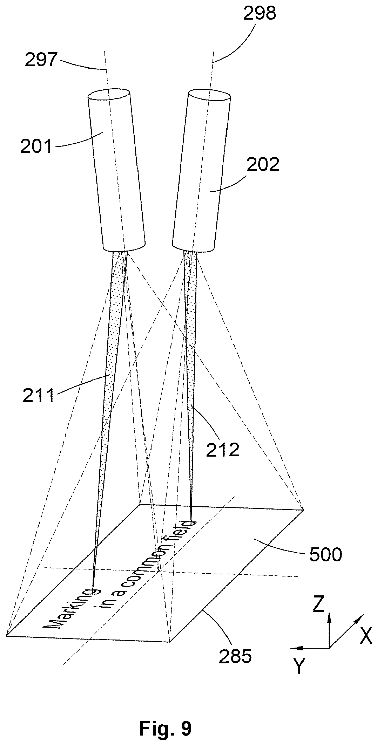

Fig. 9 schematically depicts a perspective view of a fourth arrangement of first and second laser marking heads 201, 202 having completely overlapping marking fields 281, 282 according to an aspect of the present disclosure. In the example of Fig. 9, the first and second laser marking heads 201, 202 are arranged adjacent one another to mark a product 500 passing beneath the first and second laser marking heads 201, 202. The first and second laser marking heads 201, 202 steer first and second beams of laser light 211, 212 respectively within a common marking field 285. A plane X, Y of the common marking field 285 may be substantially perpendicular to a vertical axis Z. A first axis 297 of the first laser marking head 201 is tilted with respect to a vertical axis. A second axis 298 of the second laser marking head 202 is tilted with respect to the vertical axis Z. The first and second laser marking heads 201, 202 are tilted toward each other such that the first and second marking fields completely overlap to form the common marking field 285. The arrangement of Fig. 9 advantageously reduces a marking distortion caused by movement of the product 500 during the marking process. The small form factor of the laser marking heads 201, 202 advantageously assists in allowing the laser marking heads 201, 202 to be arranged close together such that their marking fields 281, 282 completely overlap.

In any of the first, second, third and fourth arrangements of Figs. 8A-9, the first and second laser marking heads 201, 202 may be configured to simultaneously mark within their partially overlapping marking fields 281, 282, 285. Alternatively or additionally, the first and second laser marking heads 201, 202 may be configured to mark within the at least partially overlapping marking fields 281, 282, 285 at different times. Having at least partially overlapping marking fields 281, 282, 285 advantageously reduces overall processing time per product. As previously described, the first laser marking head 201 may be configured to perform a first material treatment of the products 215, 295, 500 and the second laser marking heads 202 may be configured to perform a different material treatment of the products 215, 295, 500. Having at least partially overlapping marking fields 281, 282, 285 advantageously improves the combined results of different material treatments of the products because the different material treatments may be performed simultaneously and/or in quick succession. For example, the first laser marking head 201 may preheat a location in the overlapping marking fields 281, 282, 285 and the second laser marking head may mark the pre-heated location in quick succession whilst the pre-heated location is still at an optimal temperature for the marking to take place. Any of the first, second, third and fourth arrangements of Figs. 8A-9 may comprise a greater number of laser marking heads 201, 202 (e.g. three or more) having at least partially overlapping marking fields. For example, two or more of the four laser marking heads 201-204 of Fig. 2 may be arranged to have at least partially overlapping marking fields.

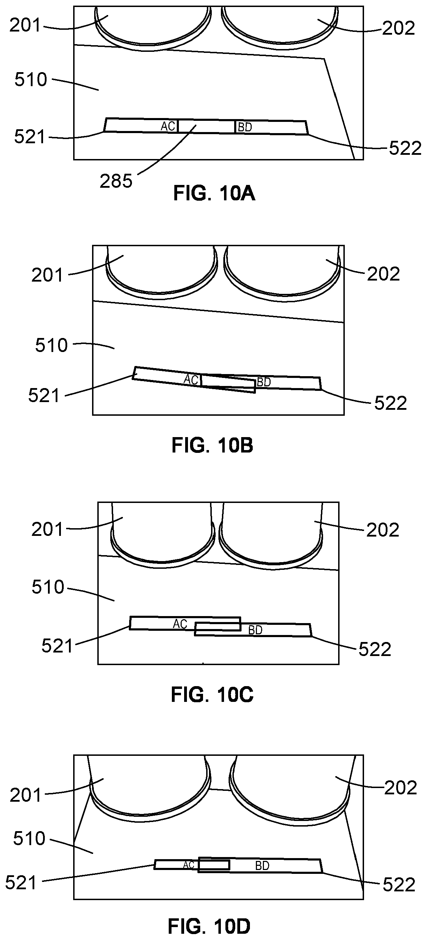

Fig. 10, consisting of Figs. 10A-10D, shows four different alignment arrangements between first and second laser marking heads 201, 202. The first laser marking head 201 is configured to project a first visible alignment pattern 521 onto a surface 510 and the second laser marking head 202 is configured to project a second visible alignment pattern 522 onto the surface 510. The surface 510 may form part of a production line (not shown). In the examples of Fig. 10A-D, the first visible alignment pattern 521 comprises a rectangle with the characters "A" and "C" located proximate the centre of the rectangle, and the second visible alignment pattern 522 comprises a rectangle with the characters "B" and "D" located proximate a centre of the rectangle. The first and second visible alignment patterns 521, 522 are configured to allow relative alignment of the marking fields (not shown) of the first and second laser marking heads 201, 202. That is, an orientation, position and/or size of the first visible alignment pattern 521 corresponds to an orientation, position and/or a size of the marking field of the first laser marking head 201. Likewise, an orientation, position and/or size of the second visible alignment pattern 522 corresponds to an orientation, position and/or size of the marking field of the second laser marking head 202.

Fig. 10A shows an example of a desired alignment arrangement between the marking fields of the first and second laser marking heads 201, 202. The relative orientations, sizes and positions of the visible alignment patterns 521, 522 indicate that the marking fields of the first and second laser marking heads 201, 202 are aligned to partially overlap to form a common marking field 285 (in a similar manner to the example of Fig. 8A). The small form factor of the laser marking heads 201, 202 advantageously assists the laser marking heads 201, 202 to be arranged close together such that their visible alignment patterns 521, 522 may be aligned with respect to each other. The small form factor of the laser marking heads 201, 202 also improves an ease with which an alignment between the visible alignment patterns 521, 522 may be adjusted as the positions of the laser marking heads 201, 202 are easily adjustable by hand. A cylindrical shape of a housing of the laser marking heads 201, 202 advantageously improves an ease with which a rotational alignment and/or a vertical alignment between the visible alignment patterns 521, 522 may be achieved. One or both of the laser marking heads 201, 202 may comprise a focus finding system such as the electromagnetic radiation system disclosed in international patent application PCT/EP2020/076149. The electromagnetic radiation system may be used to confirm that the one or both laser marking heads 201, 202 is at a correct working distance relative to the surface 510 (e.g. a product).

In the example of Fig. 10B, the relative orientations of the visible alignment patterns 521, 522 indicate that there is a rotational offset between the marking fields of the first and second laser marking heads 201, 202. In order to reach the desired arrangement of Fig. 10A, one or both of the laser marking heads 201, 202 may be rotated about a surface normal of the surface 510 until the visible alignment patterns rotationally align with one another as shown in Fig. 10A.

In the example of Fig. 10C the relative positions of the visible alignment patterns 521, 522 indicate that there is a translational offset between the marking fields of the first and second laser marking heads 201, 202. In order to reach the desired arrangement of Fig. 10A, one or both of the laser marking heads 201, 202 may be moved in one or more directions that are parallel to the surface 510 until the visible alignment patterns translationally align with one another as shown in Fig. 10A.

In the example of Fig. 10D, the relative sizes of the visible alignment patterns 521, 522 indicate that there is a scaling offset between the marking fields of the first and second laser marking heads 201, 202. In order to reach the desired arrangement of Fig. 10A, one or both of the laser marking heads 201, 202 may be moved in a direction that is perpendicular to the surface 510 until the visible alignment patterns share the same scale as shown in Fig. 10A.

The visible alignment patterns 521, 522 may comprise other shapes and/or patterns (e.g. a circle, a crosshair, etc.). The first and second laser marking heads 201, 202 may each comprise a visible light source (e.g. a diode) configured to project the visible alignment patterns 521, 522. The visible light sources (not shown) may be configured to emit any desired colour of visible light. The visible light source may emit green light. The human eye is more sensitive to green light than other colours of light, and so using green light to form the visible alignment patterns 521, 522 may advantageously improve an alignment accuracy because a user is better able to see the visible alignment patterns 521, 522. The visible alignment patterns 521, 522 advantageously improve an ease with which the laser marking system may be set-up. The visible alignment patterns 521, 522 advantageously enable precise rotational or angular alignment corrections, translational (e.g. X/Y plane) alignment corrections and/or scale (e.g. Z-axis) alignment corrections between two or more laser marking heads 201, 202. A greater number of laser marking heads 201, 202 (e.g. three or more) may be aligned with respect to each other using their visible alignment patterns 521, 522. For example, the marking fields of two or more of the four laser marking heads 201-204 shown in Fig. 2 may be aligned using their respective visible alignment patterns.

The laser marking system may comprise an alignment detector (not shown) configured to detect the visible alignment patterns 521, 522 and produce an alignment signal indicative of the relative alignment of the marking fields of the first and second laser marking heads 201, 202. The laser marking system may further comprise an actuation system (not shown) configured to use the alignment signal to move at least one of the first and second laser marking heads 201, 202 to bring the respective marking fields into a desired alignment. The alignment detector and the actuation system may act together to form an automated alignment system. Alternatively, the laser marking heads 201, 202 may be adjusted manually to bring the respective marking fields into a desired alignment. Alternatively or additionally, the actuation system may be controlled using a user interface (such as the user interface 209 shown in Fig. 2) and software that forms part of the laser marking system (e.g. forming part of one of the controllers of the laser marking heads 201, 202). All of the aforementioned alignment corrections (i.e. rotational or angular alignment corrections, translational (e.g. X/Y plane) alignment corrections and/or scale (e.g. Z-axis) alignment corrections) may be performed by a user interacting with the user interface to adjust a position and/or orientation of the laser marking heads 201, 202 via the actuation system. Alternatively or additionally, the user interface may be used in conjunction with marking software to adjust characteristics of an image that is to be marked on the product such that the image appears correctly on the product. For example, the image to be marked may be rotated, translated, scaled or resized, stretched, tilted, etc. within the marking software before being converted into laser marking vectors such that the image marked on the product correspond with the desired image. This may be particularly useful when marking on a surface that is tilted with respect to the laser marking heads. The user interface may allow control of several different laser marking heads 201, 202. The process of bringing different visible alignment patterns of different laser marking heads 201, 202 into a desired alignment with each other may involve automatic physical adjustments to the laser marking heads and/or their respective optical components, manual adjustments of the laser marking heads, manual configuration of an alignment setting of the user interface and/or software configuration of the image to be marked via the user interface. Physical adjustments of the laser marking heads may be considered an initial coarse alignment process whereas automatic adjustments of the laser marking heads using actuation systems and/or software adjustments of the image to be marked may be considered subsequent fine alignment processes.

As previously discussed, with reference to Fig. 2, the laser marking system 200 may comprise a first detector 240. The first detector 240 is configured to detect a position of a product 220 relative to the first laser marking head 201 and output a first detector signal 245 indicative of the position. The first detector 240 may comprise, for example, a camera. The position of the detector 240 relative to the first laser marking head 201 may be fixed and known. The first detector 240 may be configured to detect a position of the product 220 relative to a marking field (not shown) of the first laser marking head 201. The second controller 232 is configured to receive the first detector signal 245 and control the second laser marking head 202 at least partially based on the first detector signal 245. In the example of Fig. 2, the first detector 240 provides the first detector signal 245 to the first controller 231. The first controller 231 then provides the first detector signal 245 to the second controller 232, e.g. as part of a second sub-set of data 206. The first controller 231 may provide the first detector signal 245 to the third and/or fourth controllers 233, 234 as part of third and/or fourth sub-set of data 207, 208 respectively. If the laser marking system 200 comprises a leader-follower arrangement of controllers 231-234 and laser marking heads 201-204, the first detector 240 may be configured to detect a position of a product 220 relative to the laser marking head 201 associated with the leader controller 231 and output a first detector signal 245 indicative of the position. The follower controllers 232-234 may receive the first detector signal 245 and use the first detector signal 245 to determine a subsequent marking position of the product 220.

The second controller 232 may use the first detector signal 245 to determine a marking position on the product 220 (i.e. a point on the product 220 that is to be marked by the second laser marking head 202). The second controller 232 may control the second laser marking head 202 (e.g. by sending control signals to galvo mirrors of the second laser marking head 202) such that the second laser marking head 202 directs laser light 212 to the marking position. The production line 215 may carry the products to discrete stations, such as workstations (not shown). The production line 215 may comprise a conveyor belt configured to progress the products 220 through the workstations in discrete steps and/or within discrete time intervals. First, second, third and fourth workstations (not shown) may include the first, second, third and fourth laser marking heads 201-204 respectively. The relative position detected by the first detector 240 at a first workstation may be used to control a laser marking head at a different workstation. The relative position detected by the first detector 240 may be referred to by any of the controllers 231-234 to determine one or more marking positions on the product 220. The relative position detected by the first detector 240 may be used by one or more of the controllers 231-234 in combination with known information regarding relative positions of the marking fields of the laser marking heads 201-204 and information regarding the progression of products 220-224 between the marking fields of the laser marking heads 201-204 to control the laser marking heads 201-204). This advantageously avoids the need for multiple detectors to determine marking positions per laser marking head or per workstation, thereby simplifying the laser marking system 200. Furthermore, the first detector 240 supports a modularity of the laser marking system 220 because the product position information captured by the first detector 240 may be used by any number of laser marking heads 201-204.

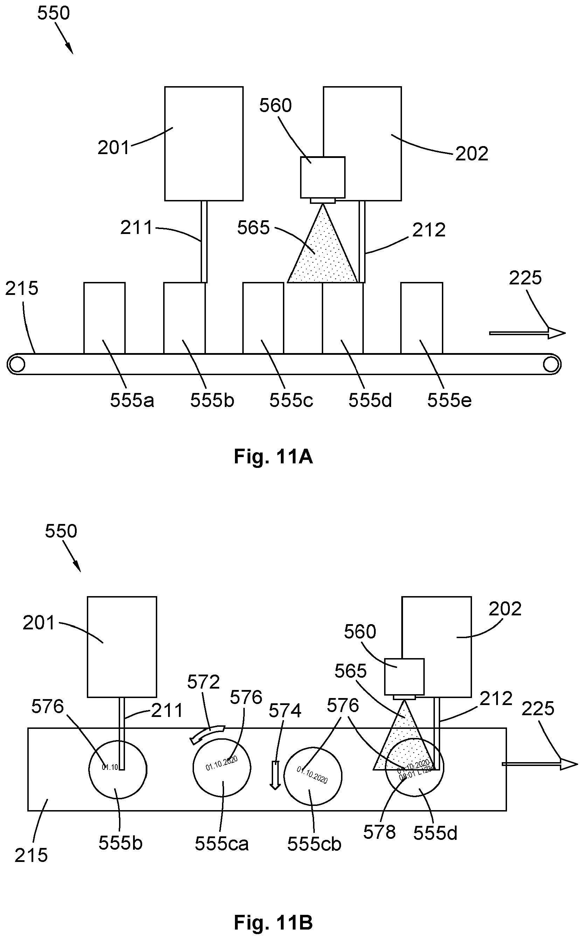

Fig. 11A schematically depicts a side view of a laser marking system 550 comprising a second detector 560 according to an aspect of the present disclosure. The laser marking system 550 comprises first and second laser marking heads 201, 202 configured to mark a product moving along a production line 215. The first and second laser marking heads 201, 202 each comprise a controller (not shown) that may be arranged in a leader-follower arrangement as described above. In the example of Fig. 11A, the first controller of the first laser marking head 201 is the leader and the second controller of the second laser marking head 202 is the follower. The product is shown at five different times 555a-555e during the product's journey along the production line 215. At a first time 555a the product is approaching the first laser marking head 201. At a second time 555b the product is being marked by the first laser marking head 201. At a third time 555c the product is moving between the first laser marking head 201 and the second laser marking head 202. At a fourth time 555d the product is being marked by the second laser marking head 202. At a fifth time 555e the product is moving away from the laser marking system 550 after having been marked by the first and second laser marking heads 201, 202.

The second detector 560 is configured to detect a previously marked position on the product and output a second detector signal indicative of the previously marked position on the product. The second detector 560 monitors the positions of products approaching the second laser marking head 202 within a field of view 565. The second detector 560 may comprise, for example, a camera. The second controller (not shown) of the second laser marking head 201, 202 is configured to receive the second detector signal and use the second detector signal to determine a subsequent marking position on the product. In the example of Fig. 11A, the second detector 560 is configured to detect a position of the product that was previously marked by the first laser marking head 201. The second controller of the second laser marking head 202 is configured to use the second detector signal to determine a subsequent marking position on the product for the second laser marking head 202 to mark. The second detector 560 may obtain an image of a product 555d previously marked by the first laser marking head 201 and provide the image to the second controller 232. The second controller 232 may compare the image captured by the second detector 560 with a known template image and thereby determine a subsequent marking position on the product for the second laser marking head 202 to mark. The second controller 232 control the second laser marking head 202 to mark the product at least partially based on the determined subsequent marking position. The known template image may, for example, comprise an image of the product (e.g. an overall outline or perimeter of the product) and/or an image of the message to be marked on the product and/or a portion of the message to be marked on the product (e.g. text to be marked by the first laser marking head 201). The second detector 560 may be located at least partially within the follower laser marking head 202 or outside the follower laser marking head 202.

Fig. 11B schematically depicts a view from above the laser marking system of Fig. 11A. At the first time 555a the first laser marking head 201 marks the product with a first line of information 576 comprising a date reading "01.10.2020". Fig. 11B shows the product at two intermediate times 555ca, 555cb when moving between the first and second laser marking heads 201, 202. At a first intermediate time 555ca the product undergoes some unwanted rotational movement 572 relative to the second laser making head 202. At a second intermediate time 555cb the product 555 undergoes some unwanted translational movement 574 relative to the second laser marking head 202. The unwanted movements may occur due to any number of reasons (e.g. an unexpected vibration causes the product to shift and move whilst on the production line 215). At the fourth time 555d the second laser marking head 202 marks the product with a second line of information 578 comprising a time and a serial number that reads "08:01 L1234". If the second detector 560 was not present, the second controller may assume that the product has not undergone any unwanted movement and cause the second laser marking head 202 to mark the second line of information 578 on the product at an incorrect position. This may result in at least portions of the first and second lines of information 576, 578 being unreadable due to overlap. However, the second controller uses the second detector signal to detect the previously marked position on the product and/or the position of the previously marked product (from which it may be possible to derive the previously marked position on the product) in order to mark the second line of information 578 on the product at a correct location relative to the first line of information 576 or relative to the product itself (which in turn may reveal the correct position of the second line of information 578 relative to the first line of information 576). Thus, the second detector 560 advantageously reduces or prevents misalignment of portion of information 576, 578 marked by two or more laser marking heads 201, 202 on one product. The arrangements of Figs. 11A and 11B may comprise a greater number of laser marking heads 201, 202 (e.g. three or more) and a greater number of second detectors 560 (e.g. two or more) configured to detect subsequent marking positions for use by the greater number of laser marking heads 201, 202. For example, the second, third and/or fourth laser marking heads 202-204 of Fig. 2 may each comprise second detector 680 configured to detect a subsequent marking position for the respective laser marking head 203-204 to use when marking the products 220-224.

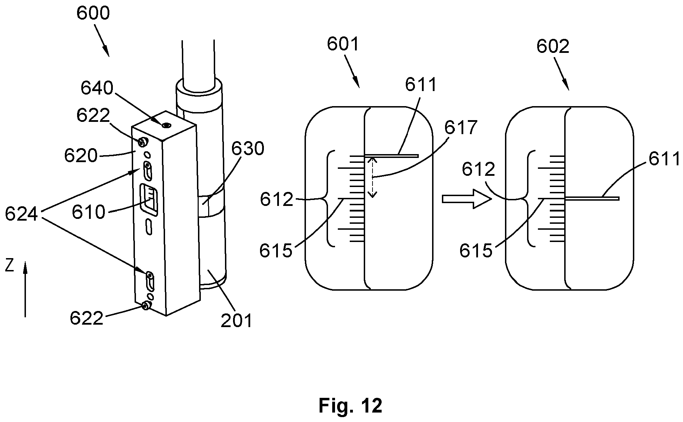

Fig. 12 schematically depicts a holder 600 configured to support a first laser marking head 201 according to an aspect of the present disclosure. Fig. 12 shows a perspective view of the holder 600 supporting the first laser marking head 201. Fig. 12 further shows a first magnified view 601 of a first scale 610 of the holder 600 before an alignment procedure. Fig. 12 also shows a second magnified view 602 of the first scale 610 of the holder 600 after an alignment procedure. The holder 600 is configured to support the first laser marking head 201 in a pre-determined position relative to the holder 600. The holder 600 comprises a body portion 620 and a receiver portion 630 extending from the body portion 620 configured to receive the first laser marking head 201. In the example of Fig. 12A, the receiver portion 630 comprises a looped strap extending from a side of the body portion 620 through which the first making head 201 may be inserted. The strap 630 may be tightened to secure the first marking head 201 to the holder 600. The first scale 610 is configured to indicate a position of the first laser marking head 201 relative to the holder 600. The first scale 610 comprises a first mark 611 indicative of a position of the body portion 620 and a second mark 612 indicative of a position of the receiver portion 630, which in turn is indicative of a position of the first laser marking head 201 when held by the receiver portion 630. In the example of Fig. 12, the first mark 611 comprises an indication mark extending in a first direction and the second mark 612 comprises a series of equally spaced lines extending in an opposite direction to the first direction such that the first scale 610 resembles a Vernier scale. The second mark 612 comprises a central line 615 which, when aligned with the indication mark of the first mark 611, may indicate a pre-determined position of the first laser marking head 201 relative to the holder 600.

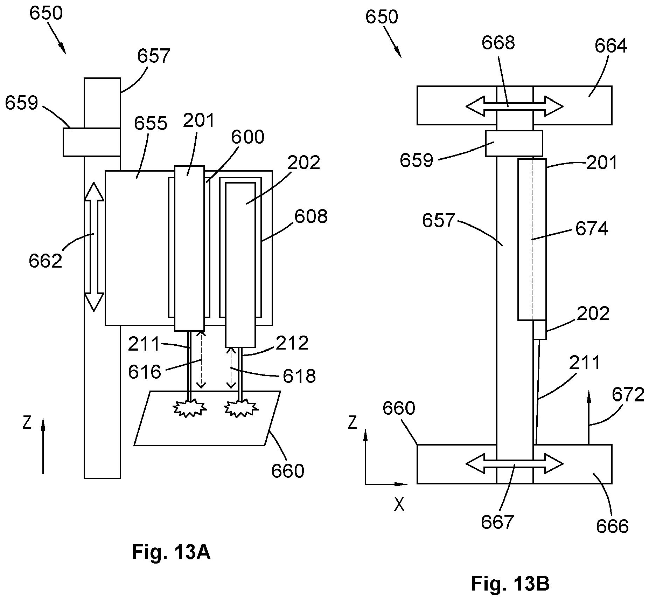

The receiver portion 630 may be configured to receive the first laser marking head 201 in a fixed arrangement. That is, once the first laser marking head 201 is received in the receiver portion 630, a position of the first laser marking head 201 relative to the second mark 612 may be fixed. The holder 600 further comprises a first actuator 640 configured to adjust the position of the first laser marking head 201 relative to the holder 600. In the example of Fig. 12, the first actuator 640 comprises a screw configured to rotate and thereby adjust a position of the receiver portion 630 relative to the body portion 620. The first actuator 640 may comprise alternative actuation means. For example, the screw may act to lock and unlock the position of the receiver portion 630 (and the laser marking head 201) relative to the body portion 620. When unlocked, a user may manually adjust a position of the receiver portion 630 relative to the body portion 620 until a desired alignment between the two is reached. The user may then turn the screw to lock the receiver portion 630 in place, thereby locking the desired alignment between the laser marking head 201 and holder 600. Alternatively, the first actuator 640 may comprise a handle that may be rotated in a first rotational direction to move the receiver portion 630 in a first direction relative to the body portion 620. The handle may be rotated in an opposite rotational direction to move the receiver portion 630 in an opposite direction relative to the body portion 620. The first actuator 640 may be configured to adjust a vertical position Z, a horizontal position and/or an angle of the first laser marking head 201 relative to a product to be marked (not shown). In the example of Fig. 12, the first actuator 640 is configured to adjust a vertical position Z of the receiver portion 630 relative to the body portion 620. Rotation of the screw 640 in a first rotational direction moves the receiver portion 630 in a first vertical direction Z relative to the body portion 620 and rotation of the screw 640 in an opposite rotational direction moves the receiver portion 630 in an opposite vertical direction relative to the body portion 620. The body portion 620 of the holder 600 houses the scale 610 and the first actuator 640. The body portion 620 comprises mounts 622 configured to allow the holder 600 to be mounted to a bracket (shown in Fig. 13A). The body portion 620 comprises fasteners (e.g. screws) configured to mount the receiver portion 630 to the body portion 620.

The first magnified view 601 of the first scale 610 of the holder 600 indicates that a vertical offset 617 exists between the first mark 611 and the central line 615 of the second mark 612. This in turn, indicates an equivalent vertical offset 617 between the holder 600 and the first laser marking head 201 (i.e. that the first laser marking head 201 and the holder 600 are not in the pre-determined relative position). The first actuator 640 may be manipulated to bring the first mark 611 closer to the central line 615 of the second mark 612. The second magnified view 602 of the first scale 610 of the holder 600 indicates that, after manipulation of the first actuator 640, the first mark 611 has been brought into alignment with the central line 615 of the second mark 612. That is, in the second magnified view 602, the pre-determined position of the first laser marking head 201 relative to the holder 600 has been reached. The pre-determined position may correspond to a correct working distance of the first laser marking head 201 (i.e. a correct separation between the first laser marking head 201 and a product to be marked by the first laser marking head 201).

Fig. 13A schematically depicts a front view of a holder system 650 comprising a first holder 660 configured to support a first laser marking head 201 and a second holder 608 configured to support a second laser marking head 202 according to an aspect of the present disclosure. The first and second laser marking heads 201, 202 are shown in use directing first and second beams of laser light 211, 212 to a substrate 660 respectively for marking the substrate 660. The first holder 600 may be substantially identical to the holder 600 depicted in Fig. 12. The second holder 608 may comprise substantially the same components as the first holder 600 (i.e. a body portion, a receiver portion, a second scale configured to indicate a position of the second laser marking head 202 relative to the second holder 608, an actuator, mounts, etc. (not shown)).

The working distance 616 of the first laser marking head 201 may be different to the working distance 618 of the second laser marking head 202. For example, the first laser marking head 201 may have a working distance 616 of about 105 mm. With reference to Fig. 12, the first actuator 640 of the holder 600 of the first laser marking head 201 may adjusted to reach this working distance such that the central line 615 and indication mark 611 are in alignment (i.e. set at zero offset on the scale 610). Referring to Fig. 13A, the second laser marking head 202 may have a working distance 618 of about 100 mm. Referring to Fig. 12 and Fig. 13A, the first actuator 640 of the second holder 608 supporting the second laser marking head 202 may be adjusted such that the indication mark 611 has an offset 617 of about 5mm relative to the central line 615 (i.e. relative to the zero offset of the first scale 610 of the first holder 600). Individual vertical working distances for different laser marking heads and/or different products may be determined and used to apply different indication marks to different holders. The indication marks may be referred to when setting the laser marking system up for fast and easy laser marking head and/or product changeover at a production line. As previously described, one or both of the laser marking heads 201, 202 may comprise a focus finding system such as the electromagnetic radiation system disclosed in international patent application PCT/EP2020/076149. The focus finding system may be used to adjust a leader laser marking head (e.g. the first laser marking head 201) to a correct working distance 616. The difference in working distance between the leader laser marking head and the follower laser marking heads (e.g. the second laser marking head 202) may be known. As such, the follower laser marking head 202 may be offset 617 from the scale 610 of the first holder 600 by the known difference in working distances, thereby setting the follower laser marking head at the correct working distance 618.

The holder system 650 comprises a bracket 655 onto which the first and second holders 600, 608 are mounted. The bracket 655 is movably mounted to a support 657. The holder system 650 comprises a first actuator (not shown) configured to adjust a vertical position 662 of the bracket 655, and thus both of the first and second laser marking heads 201, 202, relative to the support 657. By manipulating the first actuator, both the separations 616, 618 between the substrate 660 and the first and second laser marking heads 201, 202 may be simultaneously adjusted. The holder system 650 comprises a fourth mark 659 configured to indicate a position of the bracket 655 relative to the support 657.

Fig. 13B schematically depicts a side view of the holder system 650 of Fig. 13A. Opposing end portions of the support 657 are movably mounted to first and second rails 664, 666. The holder system 650 comprises a second actuator (not shown) configured to adjust a first horizontal position 668 of the support 657, and thus both of the first and second laser marking heads 201, 202, relative to the first rail 664. The holder system 650 further comprises a third actuator (not shown) configured to adjust a second horizontal position 667 of the support 657, and thus both of the first and second laser marking heads 201, 202, relative to the second rail 666. By manipulating both the second and third actuators to adjust the first and second horizontal positions in the same direction, horizontal positions of the first and second laser marking heads 201, 202 relative to the substrate 660 may be simultaneously adjusted. The small form factor of the laser marking heads 201, 202 advantageously assists in forming a compact holder system 650 in which the laser marking heads 201, 202 may be supported in close proximity to each other.

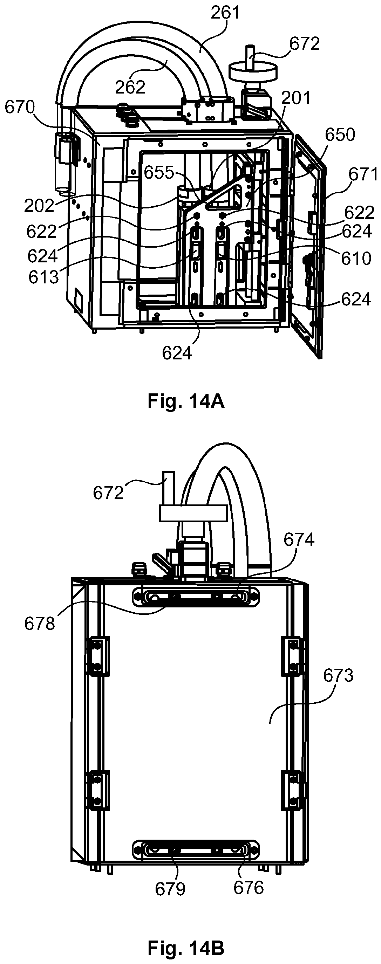

Fig. 14A schematically depicts a view from behind a holder system housing 670 according to an aspect of the present disclosure. The housing 670 is configured to house the holder system 650 of Figs. 13A and 13B. The housing 670 comprises door 671 through which the holder system 650 may be viewed. First and second laser marking heads 201, 202 are held by respective holders (not visible) which are mounted onto the bracket 655 via mounts 622 as previously described. First scales 610, 613 of the first and second holders are visible through the open door 671. The housing 670 comprises a handle 672 connected to the first actuator of the holder system 650. By turning the handle 672, a user may adjust a vertical position of the bracket 655, and thus both of the first and second laser marking heads 201, 202, relative to the housing 670 and a product to be marked (not shown). First and second flexible umbilical cords 261, 262 are connected to first and second laser making heads 201, 202 respectively. The first and second flexible umbilical cords 261, 262 (which are example of connectors 261, 262 as shown in Fig. 2) exit an upper surface of the housing 670 and extend to first and second controllers (not shown) of the first and second laser marking heads 201, 202.

Fig. 14B schematically depicts a view from the side of the holder system housing 670 of Fig. 14A. A side panel 673 of the housing 670 comprises first and second apertures 674, 676 through which second and third actuators 678, 679 of the holder system 650 may be accessed. In the example of Fig. 14B, the second and third actuators 678, 679 comprise screws that can be loosened to allow a horizontal position of the bracket 655 and the first and second laser marking heads 201, 202 to be manually adjusted until a desired horizontal position is reached. The screws 678, 679 may then be tightened in order to hold the bracket 655 (and the laser marking heads 201, 202) in the desired horizontal position. The second and third actuators 678, 679 may comprise alternative actuation means (e.g. a handle as described above in relation to the first actuator 640 of Fig. 12A). The small form factor of the laser marking heads 201, 202 advantageously assist in forming a compact housing 670 in which the laser marking heads 201, 202 may be housed in close proximity to each other. The housing 670 may be configured to house a greater number of laser marking heads 201, 202 (e.g. three or more). For example, the housing 670 may be configured to house the four laser marking heads 201-204 shown in Fig. 2. The second and third actuators 678, 679 may be used to adjust a horizontal position of the laser marking heads 201-204 within the housing 670 relative to the production line 215 (e.g. to centre the laser marking heads 201-204 above products 220-224 on the production line 215). As such, alignment of the housing 670 with respect to the production line 215 does not need to be done with high accuracy as fine adjustments to the positions of the laser marking heads 201-204 is possible using actuators 678, 679 that are accessible outside the housing 670.

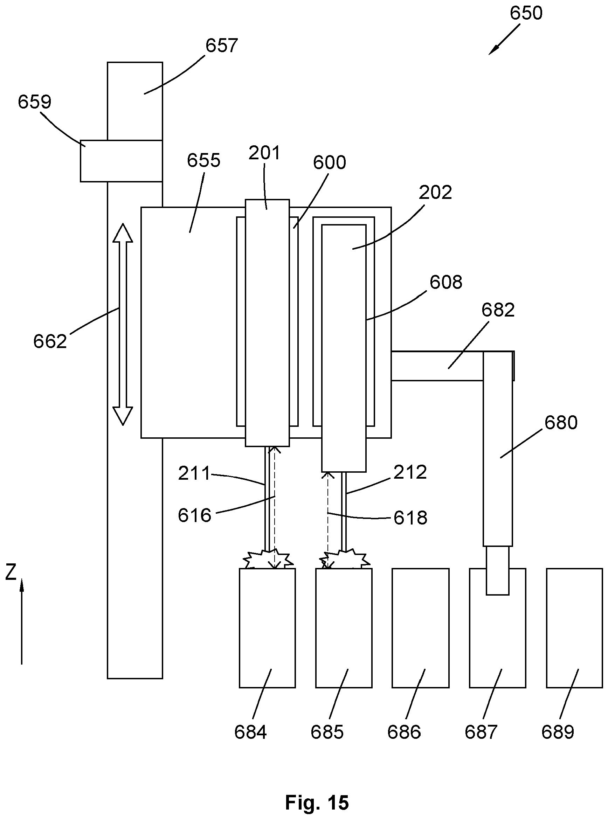

Fig. 15 schematically depicts a holder system 650 comprising a third detector 680 according to an aspect of the present disclosure. The holder system 650 shares the components of the holder system 650 shown in Figs. 13A-B, which will not be described again here to avoid repetition. The third detector 680 is fixed to the holder system 650 in a known arrangement relative to the holder system 650. In the example of Fig. 15, the third detector 680 is supported by an arm 682 that extends from the bracket 655 of the holder system 650. The third detector 680 is configured to detect a position of a product 684-689 relative to the holder system 650 and thus the first and second laser marking heads 201, 202. The third detector 680 may comprise a camera. The third detector 680 advantageously improves an ease with which the laser marking heads 201, 202 may be reconfigured to mark a different set of products in a production line.

The third detector 680 advantageously reduces or avoids the need for further detector alignment when changing products. For example, a first product may have a first height and a second product may have a second height that is different to the first height. When the production line is updated to changeover from the first product to the second product, the third detector 680 may detect the height difference between the first and second products. A user may refer to the height difference detected by the third detector 680 and adjust a position of the holder system 650 relative to the production line accordingly (e.g. by manipulating the first actuator to adjust a vertical position 662 of the bracket 655 as previously described). The third detector 680 may be used in combination with any of the other detectors described herein. The third detector 680 and the holder system are fixed at pre-defined positions relative to the first and second laser marking heads 201, 202 for easy line setup at a production line. The holder system 650 may further comprise an automated actuation system (not shown) comprising the detector 680. The automated actuation system may use the position of a product 684-689 relative to the holder system 650 detected by the third detector 680 to automatically adjust a position 662 of the bracket 655 (and the first and second laser marking heads 201, 202) relative to the products 684-689 such that the first and second laser marking heads 201, 202 are at correct working distances 616, 618. The holder systems 650 of Figs. 13A, 13B and Fig. 15 may be configured to support a great number of laser marking heads 201, 202 (e.g. three or more). For example, the holder system 650 may be configured to support the four laser marking heads 201-204 of Fig. 2.

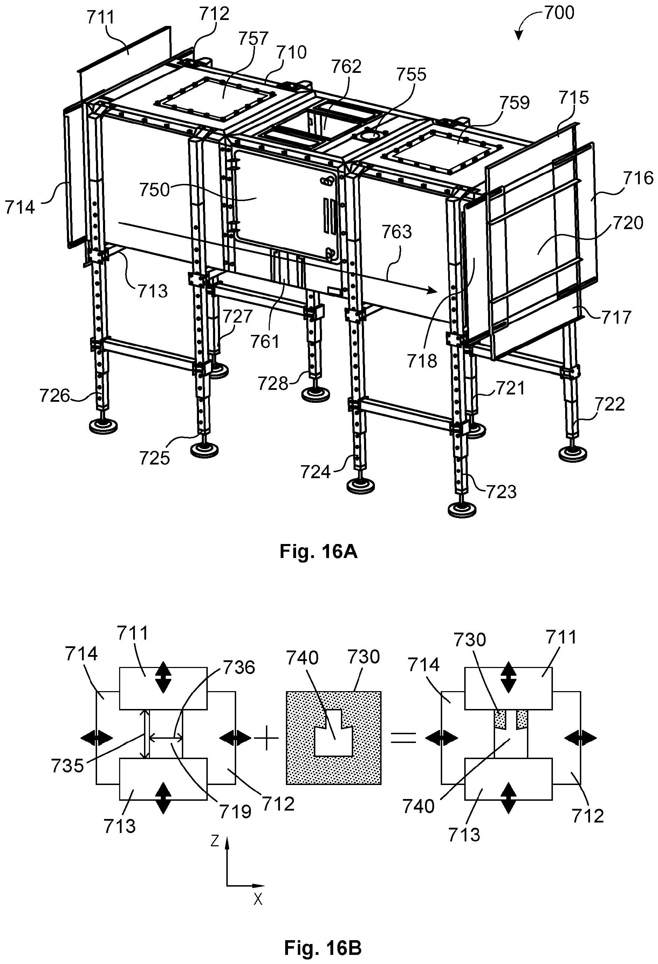

Fig. 16A schematically depicts a shielding apparatus 700 configured to house a laser marking head according to an aspect of the present disclosure. The shielding apparatus 700 is configured to house one or more laser marking heads (not shown). For example, the shielding apparatus 70 may be configured to house the four laser marking heads 201-204 of Fig. 2. The shielding apparatus 700 comprises an external shielding portion 710 configured to selectively allow physical objects (i.e. products to be marked) to pass through the shielding apparatus 700. The external shielding portion 710 comprises a generally cuboid shell supported by a plurality of legs. The external shielding portion 710 comprises first and second sets of moveable shields 711-714, 715-718 located at opposing ends of the external shielding portion 710. The moveable shields 711-718 are slidably mounted to the opposing ends of the external shielding portion. The first set of moveable shields 711-714 defines an entrance (not shown) having a variable geometry and the second set of movable shields 715-718 define an exit 720 having a variable geometry. In the example of Fig. 16A, the first and second sets of moveable shields 711-718 comprise generally planar rectangular plates that are arranged to form an entrance and an exit 720 having generally square geometries. The movable shields 711-718 may have different shapes and may be arranged to form different entrance and/or exit 720 geometries. In use, a production line (e.g. a conveyor belt) passes through the shielding apparatus 700 in a product movement direction 763 from the entrance to the exit 720. The legs 721-728 may have an adjustable height to accommodate different production lines. The small form factor of the laser marking heads 201, 202 advantageously assists in forming a compact shielding apparatus 700 in which the laser marking heads 201, 202 may be supported in close proximity to each other. The shielding apparatus 700 is more compact, easier to move and easier to reconfigured for different productions lines compared to known shielding apparatus.

The shielding apparatus 700 may comprise a number of optional features. The shielding apparatus 700 may comprise a door 750 that may be opened to access a production line and/or product located within the shielding apparatus 700. The shielding apparatus 700 may comprise an opening 762 for receiving a housing for the laser marking heads (e.g. the housing shown in Figs. 14A and 14B). The shielding apparatus 700 may comprise an internal interface (not shown) configured to receive and support the housing 670 shown in Fig. 14A and Fig. 14B. The housing may comprise a detector (not shown) configured to detect a position of products passing through the shielding apparatus 700 relative to at least one of the laser marking heads. The shielding apparatus 700 may comprise a leg-receiving portion 761. If a pitch or periodicity of the legs of a conveyor belt (not shown) is smaller than a length of the shielding apparatus 700 then at least one leg of the conveyor belt may be received in the leg-receiving portion 761. The leg-receiving portion 761 comprises a moveable guard. The moveable guard may extend across a width of the shielding apparatus 700 on an underside of the shielding apparatus 700. In the example of Fig. 16A, the moveable guard of the leg-receiving portion 761 is in a closed configuration. The moveable guard of the leg-receiving portion 761 may be moved into an open configuration such that at least one leg of a conveyor belt may be received in the leg-receiving portion 761. Once a desired alignment between the shielding apparatus 700 and the conveyor belt has been reached, the moveable guard of the leg receiving portion 761 may be moved into the closed configuration such that the moveable guard surrounds the at least one leg of the conveyor belt. In this way, the shielding apparatus 700 accommodates the at least one leg of the conveyor belt whilst the moveable guard prevents laser radiation exiting the shielding apparatus 700 via the shielding portion 761 during use. The moveable guard may comprise a resilient material that conforms to a shape of the at least one leg of the conveyor belt. The moveable guard may comprise, for example, brushes.

The shielding apparatus 700 may comprise a first access port 755 configured to receive a conduit for fume extraction. The shielding apparatus 700 may comprise a second access port 757 located upstream of products entering the shielding apparatus 700. The second access port 757 may be configured to receive a device for treatment of the products before the products reach the marking fields of the laser marking heads. For example, the second access port 757 may be configured to receive a dryer (not shown). The dryer may be configured to dry the air within the shielding apparatus 700 relative to an external environment of the shielding apparatus 700. The shielding apparatus 700 may comprise a third access port 759 located downstream of products entering the shielding apparatus 700. The third access port 759 may be configured to receive a device for viewing the products after the products have been marked by the laser marking heads. For example, the third access port 759 may be configured to receive a camera (not shown). The camera may be configured to detect a position and/or a quality of a mark formed on the products, e.g. to verify that the desired mark has been correctly marked on the products.

Fig. 16B schematically depicts front views of the first set of moveable shields 711-714 of Fig. 16A, an internal shielding portion 730 and a combination thereof according to an aspect of the present disclosure. The upper and lower moveable shields 711, 713 may each be moved vertically Z to adjust a height 735 of an entrance 719 to the shielding apparatus 700. The side moveable shields 712, 714 may each be moved horizontally X to adjust a width 736 of the entrance 719. The height 735 and width 736 of the entrance 719 may be adjusted to allow the entrance to be just large enough to allow a product to be marked to pass through the entrance 719. Physical objects that are larger than the product to be marked are blocked from entering the entrance 719 by the moveable shields 711-714. The moveable shields 711-718 are easily adjustable to accommodate a variety of different dimensions (e.g. heights and widths) of products and/or production lines.

The internal shielding portion 730 is configured to prevent at least some laser radiation from exiting the shielding apparatus 700 that may otherwise pose a danger to a user of the laser marking system (e.g., some stray laser radiation may damage the eyes and/or skin of a user if incident on the user). The external shielding portion (i.e. the moveable shields 711-714) may comprise a first material, such as a metal, and the internal shielding portion 730 may comprise a more flexible material such as a plastic. For example, the internal shielding portion 730 may comprise a welding curtain. The welding curtain may have a thickness of about 0.2 mm. The second material of the internal shielding portion 730 may be soft enough to cut into a desired shape using, for example, scissors or a blade. The shape cut out of the internal shielding potion 730 may correspond to the shape of a product that is to pass though the shielding apparatus 700. In the example of Fig. 14, the product to be marked (not shown) is a bottle having a spray nozzle (e.g. a perfume bottle), and so the internal shielding portion 730 has been cut to form a bottle-shaped aperture 740 within the internal shielding potion 730. The combination of the external shielding portion comprising moveable shields 711-714 offering an easily adjustable entrance and the flexible, customisable internal shielding portion 730 provides a combined action of reducing or preventing ingress of unwanted physical objects and unwanted escape of at least some laser radiation during marking.

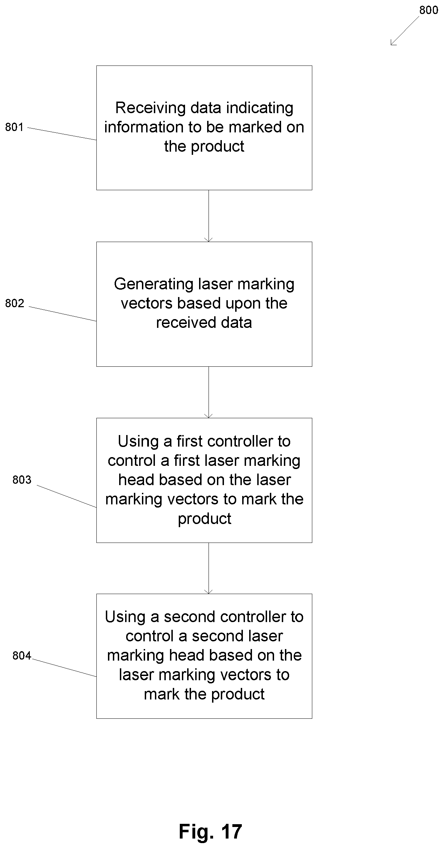

Fig. 17 shows a flowchart 800 of a method of laser marking a product according to an aspect of the present disclosure. A first step 801 of the method comprises receiving data indicating information to be marked on the product. A second step 802 of the method comprises generating laser marking vectors based upon the received data. A third step 803 of the method comprises using a first controller to control a first laser marking head based on the laser marking vectors to mark the product. A fourth step 804 of the method comprises using a second controller to control a second laser marking head based on the laser marking vectors to mark the product.

Having thus described several aspects of at least one implementation, it is to be appreciated various alterations, modifications, and improvements will readily occur to those skilled in the art. Such alterations, modifications, and improvements are intended to be part of this disclosure, and are intended to be within the scope of the disclosure. The acts of methods disclosed herein may be performed in alternate orders than illustrated, and one or more acts may be omitted, substituted, or added. One or more features of any one example disclosed herein may be combined with or substituted for one or more features of any other example disclosed. Accordingly, the foregoing description and drawings are by way of example only.

The phraseology and terminology used herein is for the purpose of description and should not be regarded as limiting. As used herein, the term "plurality" refers to two or more items or components. As used herein, dimensions which are described as being "substantially similar" should be considered to be within about 25% of one another. The terms "comprising," "including," "carrying," "having," "containing," and "involving," whether in the written description or the claims and the like, are open-ended terms, i.e., to mean "including but not limited to." Thus, the use of such terms is meant to encompass the items listed thereafter, and equivalents thereof, as well as additional items. Only the transitional phrases "consisting of" and "consisting essentially of," are closed or semi-closed transitional phrases, respectively, with respect to the claims. Use of ordinal terms such as "first," "second," "third," and the like in the claims to modify a claim element does not by itself connote any priority, precedence, or order of one claim element over another or the temporal order in which acts of a method are performed, but are used merely as labels to distinguish one claim element having a certain name from another element having a same name (but for use of the ordinal term) to distinguish the claim elements. The terms "leader" and "follower" as used herein correspond to the terms "master" and "slave", which may sometimes be used as terms of the art.

While specific embodiments of the invention have been described above, it will be appreciated that the invention may be practiced otherwise than as described. The descriptions above are intended to be illustrative, not limiting. Thus, it will be apparent to one skilled in the art that modifications may be made to the invention as described without departing from the scope of the claims set out below.

## Claims

1. A laser marking system (200) comprising:
first and second laser marking heads (201, 202) configured to mark a product (220); and,
a first controller (231) associated with the first laser marking head (201) and a second controller (232) associated with the second laser marking head (202), wherein the first and second controllers (231, 232) are configurable to:
receive data (205) indicating information to be marked on the product (220);
generate laser marking vectors (A1-D2) based upon the received data (205); and,
control their associated laser marking head (201, 202) based on the laser marking vectors (A1-D2).

2. The laser marking system (200) of claim 1, wherein the first controller (231) is configured to:
receive the data (205) indicating information to be marked on the product (220);
generate the laser marking vectors (A1-D2) based on the data (205);
determine a first sub-set of the laser marking vectors (A1, A2) to retain and a second sub-set of the laser marking vectors (B1-B4) to provide to the second controller (232);
control the first laser marking head (201) at least partially based on the first subset of the laser marking vectors (A1, A2); and,
provide the second sub-set of the laser marking vectors (B1-B4) to the second controller (232),
wherein the second controller (232) is configured to control the second laser marking head (202) at least partially based on the second sub-set of the laser marking vectors (B1-B4),
or
wherein the first controller (231) is configured to:
receive the data (205) indicating information to be marked on the product (220);
determine a first sub-set of the data (A) to retain and a second sub-set of the data (B) to provide to the second controller (232);
generate a first sub-set of the laser marking vectors (A1, A2) based on the first sub-set of data (A);
control the first laser marking head (201) at least partially based on the first sub-set of the laser marking vectors (A1, A2); and,
provide the second sub-set of the data (B) to the second controller (232), wherein the second controller (232) is configured to:
generate a second sub-set of the laser marking vectors (B1-B4) based on the second sub-set of the data (B); and,
control the second laser marking head (202) at least partially based on the second sub-set of the laser marking vectors (B1-B4),
or
wherein the first controller (231) is configured to:
receive the data (205) indicating information to be marked on the product (220);
determine a first sub-set of the data (A) to be marked by the first laser marking head (201) and a second sub-set of the data (B) to be marked by the second laser marking head (202);
generate a first sub-set of the laser marking vectors (A1, A2) based on the first sub-set of the data (A) and generate a second sub-set of the laser marking vectors (B1-B4) based on the second sub-set of the data (B);
control the first laser marking head (201) at least partially based on the first sub-set of laser marking vectors (A1, A2); and,
provide the second sub-set of the laser marking vectors (B1-B4) to the second controller (232),
wherein the second controller (232) is configured to control the second laser marking head (202) at least partially based on the second sub-set of the laser marking vectors (B1-B4).

3. The laser marking system (200) of claim 1 or claim 2, wherein the first and second sub-sets of laser marking vectors (A1-A2, B1-B4) are different.

4. The laser marking system (200) of any preceding claim, wherein the first controller (231) is configured to:
generate a third sub-set of the data (205) indicating information to be marked on the product (220);
generate a third sub-set of the laser marking vectors based on the third sub-set of data; and,
provide the third sub-set of laser marking vectors to the second controller (232),
wherein the second controller (232) is configured to control the second laser marking head (202) at least partially based on the third sub-set of the laser marking vectors,
and optionally
wherein the third sub-set of data indicates dynamic information to be marked on the product (220), and wherein the third sub-set of laser marking vectors is static.

5. The laser marking system (200) of any preceding claim, wherein the first and second laser marking heads (201, 202) are arranged such that their marking fields (281, 282) at least partially overlap,
and optionally
wherein the first and second laser marking heads (201, 202) are arranged such that their marking fields (281, 282) completely overlap,
and/or
wherein the first laser marking head (201) is configured to project a first visible alignment pattern (521) and the second laser marking head (202) is configured to project a second visible alignment pattern (522), wherein the first and second visible alignment patterns (521, 522) are configured to allow relative alignment of the marking fields (281, 282) of the first and second laser marking heads (201, 202).

6. The laser marking system (200) of any preceding claim, comprising a first detector (240) configured to detect a position of the product (220) relative to the first laser marking head (201) and output a first detector signal indicative of the position, wherein the second controller (232) is configured to receive the first detector signal and control the second laser marking head (202) at least partially based on the first detector signal,
and/or
comprising a second detector (560) configured to detect a previously marked position on the product (220) and output a second detector signal indicative of the previously marked position, wherein at least one of the first and second controllers (231, 232) is configured to receive the second detector signal and use the second detector signal to determine a subsequent marking position on the product (220).

7. The laser marking system (200) of any preceding claim, comprising a holder (600) configured to support the first and second laser marking heads (201, 202) in pre-determined positions relative to the holder (600),
and optionally
wherein the holder (600) comprises a first scale (610) configured to indicate a position of the first laser marking head (201) relative to the holder (600),
and optionally
wherein the first scale (610) comprises an indication mark (611) configured to indicate a pre-determined position of the first laser marking head (201) relative to the holder (600).

8. The laser marking system of claim 7, wherein the holder (600) comprises an actuator (640) configured to adjust a position of both of the first and second laser marking heads (201, 202) relative to the holder (600),
and/or
wherein the holder (600) comprises a third detector (680) fixed to the holder (600) in a known arrangement relative to the holder (600), wherein the third detector (680) is configured to detect a position of the product (220) relative to the holder (600).

9. The laser marking system (200) of any preceding claim, comprising a shielding apparatus (700) configured to house at least one of the first and second laser marking heads (201, 202), wherein the shielding apparatus (700) comprises:
an external shielding portion (710) configured to selectively allow physical objects to pass through the shielding apparatus (700); and,
an internal shielding portion (730) configured to prevent at least some laser radiation from exiting the shielding apparatus (700),
and optionally
wherein the external shielding portion (710) comprises a first material and the internal shielding portion (730) comprises a second material, wherein the second material is more flexible than the first material,
and/or
wherein the external shielding portion (710) comprises a plurality of moveable shields (711-718).

10. The laser marking system (200) of any preceding claim, wherein the first laser marking head (201) is configured to perform a first material treatment of the product (220) and the second laser marking head (202) is configured to perform a different material treatment of the product (220),
and/or
wherein the first controller (231) is configured to adjust an output power of the first laser marking head (201) and wherein the second controller (232) is configured to adjust an output power of the second laser marking head (202),
and/or
wherein at least one of the first and second laser marking heads (201, 202) comprises a variable focal length system configured to mark the product (220) at different focal lengths.

11. The laser marking system (200) of any preceding claim, wherein the first and second laser marking heads (201, 202) are daisy-chained in a laser marking head sequence for sequential marking of the product (220).

12. The laser marking system (200) of claim 11, comprising a fourth detector configured to detect a position of the product (220) relative to a marking field (281) of the first laser marking head (201) and output a fourth detector signal indicative of the position of the product (220) relative to the marking field (281) of the first laser marking head (201), wherein the first controller (231) is configured to:
receive the data (205) indicating information to be marked on the product (220);
generate a portion of the laser marking vectors based upon the received data (205);
control the first laser marking head (201) based on the generated portion of laser marking vectors and the fourth detector signal; and,
produce an output signal indicative of a remaining portion of the data indicative of information to be marked on the product (220), wherein the second controller (232) is configured to:
receive the output signal indicative of the remaining portion of the data;
generate remaining laser marking vectors based upon the received signal; and,
control the second laser marking head (202) based on the remaining laser marking vectors and the fourth detector signal,
or
wherein the first controller (231) is configured to:
receive product speed information;
use the product speed information and the fourth detector signal to determine whether the first laser marking head (201) has enough time to print a laser marking vector; and,
if the first controller (231) determines that the first laser marking head (201) does not have enough time to print the laser marking vector, stop the first laser marking head (201) from marking the product (220) and pass the laser marking vector to the second controller (232) as part of the output signal.

13. A method of laser marking a product (220) comprising:
receiving data (205) indicating information to be marked on the product (220);
generating laser marking vectors (A1-D2) based upon the received data (205);
using a first controller (231) to control a first laser marking head (201) based on the laser marking vectors (A1-D2) to mark the product (220); and,
using a second controller (232) to control a second laser marking head (202) based on the laser marking vectors (A1-D2) to mark the product (220).

14. The method of claim 13, comprising:
using the first controller (231) to generate the laser marking vectors (A1-D2) based on the data (205);
determining a first sub-set of the laser marking vectors (A1, A2) to retain for the first controller (231) and a second sub-set of the laser marking vectors (B1-B4) to provide to the second controller (232);
using the first controller (231) to control the first laser marking head (201) at least partially based on the first subset of the laser marking vectors (A1, A2);
providing the second sub-set of the laser marking vectors (B1-B4) to the second controller (232); and,
using the second controller (232) to control the second laser marking head (202) at least partially based on the second sub-set of the laser marking vectors (B1-B4),
or
comprising:
determining a first sub-set of the data (A) to retain for the first controller (231) and a second sub-set of the data (B) to provide to the second controller (232);
using the first controller (231) to generate a first sub-set of the laser marking vectors (A1, A2) based on the first sub-set of the data (A);
using the first controller (231) to control the first laser marking head (201) at least partially based on the first subset of the laser marking vectors (A1, A2);
providing the second sub-set of the data (B) to the second controller (232);
using the second controller (232) to generate a second sub-set of the laser marking vectors (B1-B4) based on the second sub-set of the data (B); and,
using the second controller (232) to control the second laser marking head (202) at least partially based on the second sub-set of the laser marking vectors (B1-B4),
or
comprising:
determining a first sub-set of the data (A) to retain for the first controller (231) and a second sub-set of the data (B) to provide to the second controller (232);
using the first controller (231) to generate a first sub-set of the laser marking vectors (A1, A2) based on the first sub-set of the data (A) and a second sub-set of the laser marking vectors (B1-B4) based on the second sub-set of the data (B);
using the first controller (231) to control the first laser marking head (201) at least partially based on the first sub-set of laser marking vectors (A1, A2);
providing the second sub-set of the laser marking vectors (B1-B4) to the second controller (232); and,
using the second controller (232) to control the second laser marking head (202) at least partially based on the second sub-set of the laser marking vectors (B1-B4).

15. The method of claim 13 or claim 14, comprising:
using the first controller (231) to generate a third sub-set of the data (205) indicating information to be marked on the product (220);
using the first controller (231) to generate a third sub-set of the laser marking vectors based on the third sub-set of data;
providing the third sub-set of laser marking vectors to the second controller (232); and,
using the second controller (232) to control the second laser marking head (202) at least partially based on the third sub-set of the laser marking vectors,
and optionally
wherein the third sub-set of data indicates dynamic information to be marked on the product (220), and wherein the third sub-set of laser marking vectors is static.

## Patentansprüche

1. Lasermarkierungssystem (200), umfassend:
einen ersten und einen zweiten Lasermarkierungskopf (201, 202), die dafür konfiguriert sind, ein Produkt (220) zu markieren; und
einen ersten Controller (231), der dem ersten Lasermarkierungskopf (201) zugeordnet ist, und einen zweiten Controller (232), der dem zweiten Lasermarkierungskopf (202) zugeordnet ist, wobei der erste und der zweite Controller (231, 232) konfigurierbar sind, um
Daten (205) zu empfangen, die auf dem Produkt (220) zu markierende Informationen anzeigen;
basierend auf den empfangenen Daten (205) Lasermarkierungsvektoren (A1-D2) zu erzeugen; und
basierend auf den Lasermarkierungsvektoren (A1-D2) ihren zugeordneten Lasermarkierungskopf (201, 202) zu steuern.

2. Lasermarkierungssystem (200) nach Anspruch 1, wobei der erste Controller (231) dafür konfiguriert ist,
die Daten (205) zu empfangen, die auf dem Produkt (220) zu markierende Informationen anzeigen;
basierend auf den Daten (205) die Lasermarkierungsvektoren (A1-D2) zu erzeugen;
eine erste Untergruppe der Lasermarkierungsvektoren (A1, A2) zum Behalten und eine zweite Untergruppe der Lasermarkierungsvektoren (B1-B4) zum Bereitstellen für den zweiten Controller (232) zu bestimmen;
mindestens teilweise basierend auf der ersten Untergruppe der Lasermarkierungsvektoren (A1, A2) den ersten Lasermarkierungskopf (201) zu steuern; und
dem zweiten Controller (232) die zweite Untergruppe der Lasermarkierungsvektoren (B 1-B4) bereitzustellen,
wobei der zweite Controller (232) dafür konfiguriert ist, den zweiten Lasermarkierungskopf (202) mindestens teilweise basierend auf der zweiten Untergruppe der Lasermarkierungsvektoren (B1-B4) zu steuern,
oder
wobei der erste Controller (231) dafür konfiguriert ist,
die Daten (205) zu empfangen, die auf dem Produkt (220) zu markierende Informationen anzeigen;
eine erste Untergruppe der Daten (A) zum Behalten und eine zweite Untergruppe der Daten (B) zum Bereitstellen für den zweiten Controller (232) zu bestimmen;
eine erste Untergruppe der Lasermarkierungsvektoren (A1, A2) basierend auf der ersten Untergruppe von Daten (A) zu erzeugen;
mindestens teilweise basierend auf der ersten Untergruppe der Lasermarkierungsvektoren (A1, A2) den ersten Lasermarkierungskopf (201) zu steuern; und
dem zweiten Controller (232) die zweite Untergruppe der Daten (B) bereitzustellen, wobei der zweite Controller (232) dafür konfiguriert ist,
eine zweite Untergruppe der Lasermarkierungsvektoren (B 1-B4) basierend auf der zweiten Untergruppe der Daten (B) zu erzeugen; und
mindestens teilweise basierend auf der zweiten Untergruppe der Lasermarkierungsvektoren (B1-B4) den zweiten Lasermarkierungskopf (202) zu steuern;
oder
wobei der erste Controller (231) dafür konfiguriert ist,
die Daten (205) zu empfangen, die auf dem Produkt (220) zu markierende Informationen anzeigen;
eine erste Untergruppe der von dem ersten Lasermarkierungskopf (201) zu markierenden Daten (A) und eine zweite Untergruppe der von dem zweiten Lasermarkierungskopf (202) zu markierenden Daten (B) zu bestimmen;
basierend auf der ersten Untergruppe der Daten (A), eine erste Untergruppe der Lasermarkierungsvektoren (A1, A2) zu erzeugen, und basierend auf der zweiten Untergruppe der Daten (B), eine zweite Untergruppe der Lasermarkierungsvektoren (B1-B4) zu erzeugen;
mindestens teilweise basierend auf der ersten Untergruppe von Lasermarkierungsvektoren (A1, A2) den ersten Lasermarkierungskopf (201) zu steuern; und
dem zweiten Controller (232) die zweite Untergruppe der Lasermarkierungsvektoren (B 1-B4) bereitzustellen,
wobei der zweite Controller (232) dafür konfiguriert ist, den zweiten Lasermarkierungskopf (202) mindestens teilweise basierend auf der zweiten Untergruppe der Lasermarkierungsvektoren (B1-B4) zu steuern.

3. Lasermarkierungssystem (200) nach Anspruch 1 oder Anspruch 2, wobei die erste und die zweite Untergruppe von Lasermarkierungsvektoren (A1-A2, B1-B4) unterschiedlich sind.

4. Lasermarkierungssystem (200) nach einem der vorhergehenden Ansprüche, wobei der erste Controller (231) dafür konfiguriert ist,
eine dritte Untergruppe der Daten (205) zu erzeugen, die auf dem Produkt (220) zu markierende Informationen anzeigen;
eine dritte Untergruppe der Lasermarkierungsvektoren basierend auf der dritten Untergruppe von Daten zu erzeugen; und
dem zweiten Controller (232) die dritte Untergruppe von Lasermarkierungsvektoren bereitzustellen,
wobei der zweite Controller (232) dafür konfiguriert ist, den zweiten Lasermarkierungskopf (202) mindestens teilweise basierend auf der dritten Untergruppe der Lasermarkierungsvektoren zu steuern,
und wahlweise
wobei die dritte Untergruppe von Daten auf dem Produkt (220) zu markierende dynamische Informationen anzeigt, und wobei die dritte Untergruppe von Lasermarkierungsvektoren statisch ist.

5. Lasermarkierungssystem (200) nach einem der vorhergehenden Ansprüche, wobei der erste und der zweite Lasermarkierungskopf (201, 202) derart angeordnet sind, dass sich ihre Markierungsfelder (281, 282) mindestens teilweise überlappen,
und wahlweise
wobei der erste und der zweite Lasermarkierungskopf (201, 202) derart angeordnet sind, dass sich ihre Markierungsfelder (281, 282) vollständig überlappen,
und/oder
wobei der erste Lasermarkierungskopf (201) dafür konfiguriert ist, ein erstes sichtbares Ausrichtungsmuster (521) zu projizieren, und der zweite Lasermarkierungskopf (202) dafür konfiguriert ist, ein zweites sichtbares Ausrichtungsmuster (522) zu projizieren, wobei das erste und das zweite sichtbare Ausrichtungsmuster (521, 522) dafür konfiguriert sind, eine relative Ausrichtung der Markierungsfelder (281, 282) des ersten und des zweiten Lasermarkierungskopfes (201, 202) zu erlauben.

6. Lasermarkierungssystem (200) nach einem der vorhergehenden Ansprüche, umfassend einen ersten Detektor (240), der dafür konfiguriert ist, eine Position des Produktes (220) relativ zum ersten Lasermarkierungskopf (201) zu erkennen und ein erstes Detektorsignal auszugeben, das die Position anzeigt, wobei der zweite Controller (232) dafür konfiguriert ist, das erste Detektorsignal zu empfangen und den zweiten Lasermarkierungskopf (202) mindestens teilweise basierend auf dem ersten Detektorsignal zu steuern,
und/oder
umfassend einen zweiten Detektor (560), der dafür konfiguriert ist, eine zuvor markierte Position auf dem Produkt (220) zu erkennen und ein zweites Detektorsignal auszugeben, das die zuvor markierte Position anzeigt, wobei mindestens einer von dem ersten und dem zweiten Controller (231, 232) dafür konfiguriert ist, das zweite Detektorsignal zu empfangen und das zweite Detektorsignal zu verwenden, um eine anschließende Markierungsposition auf dem Produkt (220) zu bestimmen.

7. Lasermarkierungssystem (200) nach einem der vorhergehenden Ansprüche, umfassend einen Halter (600), der dafür konfiguriert ist, den ersten und den zweiten Lasermarkierungskopf (201, 202) an vorbestimmten Positionen relativ zum Halter (600) zu tragen,
und wahlweise
wobei der Halter (600) eine erste Skala (610) umfasst, die dafür konfiguriert ist, eine Position des ersten Lasermarkierungskopfes (201) relativ zum Halter (600) anzuzeigen,
und wahlweise
wobei die erste Skala (610) eine Anzeigemarkierung (611) umfasst, die dafür konfiguriert ist, eine vorbestimmte Position des ersten Lasermarkierungskopfes (201) relativ zum Halter (600) anzuzeigen.

8. Lasermarkierungssystem nach Anspruch 7, wobei der Halter (600) einen Stellantrieb (640) umfasst, der dafür konfiguriert ist, eine Position sowohl des ersten als auch des zweiten Lasermarkierungskopfes (201, 202) relativ zum Halter (600) einzustellen,
und/oder
wobei der Halter (600) einen dritten Detektor (680) umfasst, der an dem Halter (600) in einer bekannten Anordnung relativ zum Halter (600) befestigt ist, wobei der dritte Detektor (680) dafür konfiguriert ist, eine Position des Produktes (220) relativ zum Halter (600) zu erkennen.

9. Lasermarkierungssystem (200) nach einem der vorhergehenden Ansprüche, umfassend eine Abschirmeinrichtung (700), die dafür konfiguriert ist, mindestens einen von dem ersten und dem zweiten Lasermarkierungskopf (201, 202) aufzunehmen, wobei die Abschirmeinrichtung (700) Folgendes umfasst:
einen externen Abschirmabschnitt (710), der dafür konfiguriert ist, selektiv zuzulassen, dass physische Objekte die Abschirmeinrichtung (700) passieren; und
einen internen Abschirmabschnitt (730), der dafür konfiguriert ist mindestens zu verhindern, dass ein Teil der Laserstrahlung aus der Abschirmeinrichtung (700) austritt,
und wahlweise
wobei der externe Abschirmabschnitt (710) ein erstes Material umfasst und der interne Abschirmabschnitt (730) ein zweites Material umfasst, wobei das zweite Material flexibler ist als das erste Material,
und/oder
wobei der externe Abschirmabschnitt (710) eine Vielzahl von beweglichen Abschirmungen (711-718) umfasst.

10. Lasermarkierungssystem (200) nach einem der vorhergehenden Ansprüche, wobei der erste Lasermarkierungskopf (201) dafür konfiguriert ist, eine erste Materialbehandlung des Produktes (220) auszuführen, und der zweite Lasermarkierungskopf (202) dafür konfiguriert ist, eine andere Materialbehandlung des Produktes (220) auszuführen,
und/oder
wobei der erste Controller (231) dafür konfiguriert ist, eine Ausgangsleistung des ersten Lasermarkierungskopfes (201) einzustellen, und wobei der zweite Controller (232) dafür konfiguriert ist, eine Ausgangsleistung des zweiten Lasermarkierungskopfes (202) einzustellen,
und/oder
wobei mindestens einer von dem ersten und dem zweiten Lasermarkierungskopf (201, 202) ein System mit variabler Brennweite umfasst, das dafür konfiguriert ist, das Produkt (220) an verschiedenen Brennweiten zu markieren.

11. Lasermarkierungssystem (200) nach einem der vorhergehenden Ansprüche, wobei der erste und der zweite Lasermarkierungskopf (201, 202) in einer Lasermarkierungskopfsequenz zum sequentiellen Markieren des Produktes (220) in Reihe verkettet sind.

12. Lasermarkierungssystem (200) nach Anspruch 11, umfassend einen vierten Detektor, der dafür konfiguriert ist, eine Position des Produktes (220) relativ zu einem Markierungsfeld (281) des ersten Lasermarkierungskopfes (201) zu erkennen und ein viertes Detektorsignal auszugeben, das die Position des Produktes (220) relativ zum Markierungsfeld (281) des ersten Lasermarkierungskopfes (201) anzeigt, wobei der erste Controller (231) dafür konfiguriert ist,
die Daten (205) zu empfangen, die auf dem Produkt (220) zu markierende Informationen anzeigen;
basierend auf den empfangenen Daten (205) einen Abschnitt der Lasermarkierungsvektoren zu erzeugen;
basierend auf dem erzeugten Abschnitt von Lasermarkierungsvektoren und dem vierten Detektorsignal den ersten Lasermarkierungskopf (201) zu steuern; und
ein Ausgangssignal zu erzeugen, das einen verbleibenden Abschnitt der Daten anzeigt, die auf dem Produkt (220) zu markierende Informationen anzeigen, wobei der zweite Controller (232) dafür konfiguriert ist,
das Ausgangssignal zu empfangen, das den verbleibenden Abschnitt der Daten anzeigt,
basierend auf dem empfangenen Signal verbleibende Lasermarkierungsvektoren zu erzeugen; und
basierend auf den verbleibenden Lasermarkierungsvektoren und dem vierten Detektorsignal den zweiten Lasermarkierungskopf (202) zu steuern,
oder
wobei der erste Controller (231) dafür konfiguriert ist, Produktgeschwindigkeitsinformationen zu empfangen,
die Produktgeschwindigkeitsinformationen und das vierte Detektorsignal zu verwenden, um zu bestimmen, ob der erste Lasermarkierungskopf (201) genügend Zeit hat, einen Lasermarkierungsvektor zu drucken, und
wenn der erste Controller (231) bestimmt, dass der erste Lasermarkierungskopf (201) nicht genügend Zeit hat, den Lasermarkierungsvektor zu drucken, das Markieren des Produktes (220) durch den ersten Lasermarkierungskopf (201) anzuhalten und den Lasermarkierungsvektor als Teil des Ausgangssignals an den zweiten Controller (232) weiterzuleiten.

13. Verfahren zum Lasermarkieren eines Produktes (220), umfassend:
Empfangen von Daten (205), die auf dem Produkt (220) zu markierende Informationen anzeigen;
basierend auf den empfangenen Daten (205), Erzeugen von Lasermarkierungsvektoren (A1-D2);
Verwenden eines ersten Controllers (231) zum Steuern eines ersten Lasermarkierungskopfes (201) basierend auf den Lasermarkierungsvektoren (A1-D2) zum Markieren des Produktes (220); und
Verwenden eines zweiten Controllers (232) zum Steuern eines zweiten Lasermarkierungskopfes (202) basierend auf den Lasermarkierungsvektoren (A1-D2) zum Markieren des Produktes (220).

14. Verfahren nach Anspruch 13, umfassend:
basierend auf den Daten (205), Verwenden des ersten Controllers (231) zum Erzeugen der Lasermarkierungsvektoren (A1-D2);
Bestimmen einer ersten Untergruppe der Lasermarkierungsvektoren (A1, A2) zum Behalten für den ersten Controller (231) und einer zweiten Untergruppe der Lasermarkierungsvektoren (B1-B4) zum Bereitstellen für den zweiten Controller (232);
mindestens teilweise basierend auf der ersten Untergruppe der Lasermarkierungsvektoren (A1, A2), Verwenden des ersten Controllers (231) zum Steuern des ersten Lasermarkierungskopfes (201);
Bereitstellen der zweiten Untergruppe der Lasermarkierungsvektoren (B1-B4) für den zweiten Controller (232); und
mindestens teilweise basierend auf der zweiten Untergruppe der Lasermarkierungsvektoren (B1-B4), Verwenden des zweiten Controllers (232) zum Steuern des zweiten Lasermarkierungskopfes (202),
oder
umfassend:
Bestimmen einer ersten Untergruppe der Daten (A) zum Behalten für den ersten Controller (231) und einer zweiten Untergruppe der Daten (B) zum Bereitstellen für den zweiten Controller (232);
Verwenden des ersten Controllers (231), um eine erste Untergruppe der Lasermarkierungsvektoren (A1, A2) basierend auf der ersten Untergruppe der Daten (A) zu erzeugen;
mindestens teilweise basierend auf der ersten Untergruppe der Lasermarkierungsvektoren (A1, A2), Verwenden des ersten Controllers (231) zum Steuern des ersten Lasermarkierungskopfes (201);
Bereitstellen der zweiten Untergruppe der Daten (B) für den zweiten Controller (232),
Verwenden des zweiten Controllers (232), um basierend auf der zweiten Untergruppe der Daten (B) eine zweite Untergruppe der Lasermarkierungsvektoren (B1-B4) zu erzeugen; und
mindestens teilweise basierend auf der zweiten Untergruppe der Lasermarkierungsvektoren (B1-B4), Verwenden des zweiten Controllers (232) zum Steuern des zweiten Lasermarkierungskopfes (202),
oder
umfassend:
Bestimmen einer ersten Untergruppe der Daten (A) zum Behalten für den ersten Controller (231) und einer zweiten Untergruppe der Daten (B) zum Bereitstellen für den zweiten Controller (232);
Verwenden des ersten Controllers (231), um basierend auf der ersten Untergruppe der Daten (A) eine erste Untergruppe der Lasermarkierungsvektoren (A1, A2) und basierend auf der zweiten Untergruppe der Daten (B) eine zweite Untergruppe der Lasermarkierungsvektoren (B1-B4) zu erzeugen;
mindestens teilweise basierend auf der ersten Untergruppe von Lasermarkierungsvektoren (A1, A2), Verwenden des ersten Controllers (231) zum Steuern des ersten Lasermarkierungskopfes (201);
Bereitstellen der zweiten Untergruppe der Lasermarkierungsvektoren (B1-B4) für den zweiten Controller (232); und
mindestens teilweise basierend auf der zweiten Untergruppe der Lasermarkierungsvektoren (B1-B4), Verwenden des zweiten Controllers (232) zum Steuern des zweiten Lasermarkierungskopfes (202).

15. Verfahren nach Anspruch 13 oder Anspruch 14, umfassend:
Verwenden des ersten Controllers (231) zum Erzeugen einer dritten Untergruppe der Daten (205), die auf dem Produkt (220) zu markierende Informationen anzeigen;
Verwenden des ersten Controllers (231) zum Erzeugen einer dritten Untergruppe der Lasermarkierungsvektoren basierend auf der dritten Untergruppe von Daten;
Bereitstellen der dritten Untergruppe von Lasermarkierungsvektoren für den zweiten Controller (232); und
mindestens teilweise basierend auf der dritten Untergruppe der Lasermarkierungsvektoren, Verwenden des zweiten Controllers (232) zum Steuern des zweiten Lasermarkierungskopfes (202);
und wahlweise
wobei die dritte Untergruppe von Daten auf dem Produkt (220) zu markierende dynamische Informationen anzeigt, und wobei die dritte Untergruppe von Lasermarkierungsvektoren statisch ist.

## Revendications

1. Système de marquage laser (200) comprenant :
des première et deuxième têtes de marquage laser (201, 202) configurées pour marquer un produit (220), et
un premier dispositif de commande (231) associé à la première tête de marquage laser (201) et un deuxième dispositif de commande (232) associé à la deuxième tête de marquage laser (202), les premier et deuxième dispositifs de commande (231, 232) étant configurables pour :
recevoir des données (205) indiquant des informations à marquer sur le produit (220),
générer des vecteurs de marquage laser (A1-D2) sur la base des données (205) reçues, et
commander leur tête de marquage laser (201, 202) associée sur la base des vecteurs de marquage laser (A1-D2).

2. Système de marquage laser (200) selon la revendication 1, dans lequel le premier dispositif de commande (231) est configuré pour :
recevoir les données (205) indiquant des informations à marquer sur le produit (220),
générer les vecteurs de marquage laser (A1-D2) sur la base des données (205),
déterminer un premier sous-ensemble des vecteurs de marquage laser (A1, A2) à conserver et un deuxième sous-ensemble des vecteurs de marquage laser (B1-B4) à fournir au deuxième dispositif de commande (232),
commander la première tête de marquage laser (201) au moins partiellement sur la base du premier sous-ensemble des vecteurs de marquage laser (A1, A2), et
fournir le deuxième sous-ensemble des vecteurs de marquage laser (B1-B4) au deuxième dispositif de commande (232) ;
le deuxième dispositif de commande (232) étant configuré pour commander la deuxième tête de marquage laser (202) au moins partiellement sur la base du deuxième sous-ensemble des vecteurs de marquage laser (B1-B4) ;
ou
le premier dispositif de commande (231) étant configuré pour :
recevoir les données (205) indiquant des informations à marquer sur le produit (220),
déterminer un premier sous-ensemble des données (A) à conserver et un deuxième sous-ensemble des données (B) à fournir au deuxième dispositif de commande (232),
générer un premier sous-ensemble des vecteurs de marquage laser (A1, A2) compte tenu du premier sous-ensemble de données (A),
commander la première tête de marquage laser (201) au moins partiellement sur la base du premier sous-ensemble des vecteurs de marquage laser (A1, A2), et
fournir le deuxième sous-ensemble des données (B) au deuxième dispositif de commande (232), le deuxième dispositif de commande (232) étant configuré pour :
générer un deuxième sous-ensemble des vecteurs de marquage laser (B1-B4) sur la base du deuxième sous-ensemble des données (B), et
commander la deuxième tête de marquage laser (202) au moins partiellement sur la base du deuxième sous-ensemble des vecteurs de marquage laser (B 1-B4) ;
ou
le premier dispositif de commande (231) étant configuré pour :
recevoir les données (205) indiquant des informations à marquer sur le produit (220),
déterminer un premier sous-ensemble des données (A) destinées à être marquées par la première tête de marquage laser (201) et un deuxième sous-ensemble des données (B) destinées à être marquées par la deuxième tête de marquage laser (202),
générer un premier sous-ensemble des vecteurs de marquage laser (A1, A2) sur la base du premier sous-ensemble des données (A) et générer un deuxième sous-ensemble des vecteurs de marquage laser (B1-B4) sur la base du deuxième sous-ensemble des données (B),
commander la première tête de marquage laser (201) au moins partiellement sur la base du premier sous-ensemble de vecteurs de marquage laser (A1, A2), et
fournir le deuxième sous-ensemble des vecteurs de marquage laser (B1-B4) au deuxième dispositif de commande (232),
le deuxième dispositif de commande (232) étant configuré pour commander la deuxième tête de marquage laser (202) au moins partiellement sur la base du deuxième sous-ensemble des vecteurs de marquage laser (B1-B4).

3. Système de marquage laser (200) selon la revendication 1 ou la revendication 2, dans lequel les premier et deuxième sous-ensembles de vecteurs de marquage laser (A1-A2, B1-B4) sont différents.

4. Système de marquage laser (200) selon l'une quelconque des revendications précédentes, dans lequel le premier dispositif de commande (231) est configuré pour :
générer un troisième sous-ensemble des données (205) indiquant des informations à marquer sur le produit (220),
générer un troisième sous-ensemble des vecteurs de marquage laser sur la base du troisième sous-ensemble de données, et
fournir le troisième sous-ensemble de vecteurs de marquage laser au deuxième dispositif de commande (232),
le deuxième dispositif de commande (232) étant configuré pour commander la deuxième tête de marquage laser (202) au moins partiellement sur la base du troisième sous-ensemble des vecteurs de marquage laser,
et facultativement
le troisième sous-ensemble de données indiquant des informations dynamiques à marquer sur le produit (220), et le troisième sous-ensemble de vecteurs de marquage laser étant statique.

5. Système de marquage laser (200) selon l'une quelconque des revendications précédentes, dans lequel les première et deuxième têtes de marquage laser (201, 202) sont disposées de telle façon que leurs champs de marquage (281, 282) se chevauchent au moins partiellement,
et facultativement
dans lequel les première et deuxième têtes de marquage laser (201, 202) sont disposées de telle façon que leurs champs de marquage (281, 282) se chevauchent complètement,
et/ou
dans lequel la première tête de marquage laser (201) est configurée pour projeter un premier motif d'alignement visible (521) et la deuxième tête de marquage laser (202) est configurée pour projeter un deuxième motif d'alignement visible (522), les premier et deuxième motifs d'alignement visibles (521, 522) étant configurés pour permettre un alignement relatif des champs de marquage (281, 282) des première et deuxième têtes de marquage laser (201, 202).

6. Système de marquage laser (200) selon l'une quelconque des revendications précédentes, comprenant un premier détecteur (240) configuré pour détecter une position du produit (220) par rapport à la première tête de marquage laser (201) et émettre un premier signal de détecteur indicatif de la position, le deuxième dispositif de commande (232) étant configuré pour recevoir le premier signal de détecteur et commander la deuxième tête de marquage laser (202) au moins partiellement sur la base du premier signal de détecteur,
et/ou
comprenant un deuxième détecteur (560) configuré pour détecter une position précédemment marquée sur le produit (220) et émettre un deuxième signal de détecteur indicatif de la position précédemment marquée, au moins l'un des premier et deuxième dispositifs de commande (231, 232) étant configuré pour recevoir le deuxième signal de détecteur et utiliser le deuxième signal de détecteur pour déterminer une position de marquage subséquente sur le produit (220).

7. Système de marquage laser (200) selon l'une quelconque des revendications précédentes, comprenant un support (600) configuré pour supporter les première et deuxième têtes de marquage laser (201, 202) dans des positions prédéterminées par rapport au support (600),
et facultativement
dans lequel le support (600) comprend une première échelle (610) configurée pour indiquer une position de la première tête de marquage laser (201) par rapport au support (600),
et facultativement
dans lequel la première échelle (610) comprend une marque indicative (611) configurée pour indiquer une position prédéterminée de la première tête de marquage laser (201) par rapport au support (600).

8. Système de marquage laser selon la revendication 7, dans lequel le support (600) comprend un actionneur (640) configuré pour ajuster une position des première et deuxième têtes de marquage laser (201, 202) par rapport au support (600),
et/ou
dans lequel le support (600) comprend un troisième détecteur (680) fixé au support (600) selon une disposition connue par rapport au support (600), le troisième détecteur (680) étant configuré pour détecter une position du produit (220) par rapport au support (600).

9. Système de marquage laser (200) selon l'une quelconque des revendications précédentes, comprenant un dispositif de protection (700) configuré pour loger au moins l'une des première et deuxième têtes de marquage laser (201, 202), le dispositif de protection (700) comprenant :
une partie de protection extérieure (710) configurée pour permettre sélectivement à des objets physiques de passer à travers le dispositif de protection (700), et
une partie de protection intérieure (730) configurée pour empêcher au moins une partie du rayonnement laser de sortir du dispositif de protection (700),
et facultativement
dans lequel la partie de protection extérieure (710) comprend un premier matériau et la partie de protection intérieure (730) comprend un deuxième matériau, le deuxième matériau étant plus flexible que le premier matériau,
et/ou
dans lequel la partie de protection extérieure (710) comprend une pluralité de protections mobiles (711-718).

10. Système de marquage laser (200) selon l'une quelconque des revendications précédentes, dans lequel la première tête de marquage laser (201) est configurée pour effectuer un premier traitement matériel du produit (220) et la deuxième tête de marquage laser (202) est configurée pour effectuer un traitement matériel du produit (220) différent,
et/ou
dans lequel le premier dispositif de commande (231) est configuré pour ajuster une puissance de sortie de la première tête de marquage laser (201) et dans lequel le deuxième dispositif de commande (232) est configuré pour ajuster une puissance de sortie de la deuxième tête de marquage laser (202),
et/ou
dans lequel au moins l'une des première et deuxième têtes de marquage laser (201, 202) comprend un système à distance focale variable configuré pour marquer le produit (220) à différentes distances focales.

11. Système de marquage laser (200) selon l'une quelconque des revendications précédentes, dans lequel les première et deuxième têtes de marquage laser (201, 202) sont raccordées en chaîne pour un marquage séquentiel du produit (220).

12. Système de marquage laser (200) selon la revendication 11, comprenant un quatrième détecteur configuré pour détecter une position du produit (220) par rapport à un champ de marquage (281) de la première tête de marquage laser (201) et émettre un quatrième signal de détecteur indicatif de la position du produit (220) par rapport au champ de marquage (281) de la première tête de marquage laser (201), le premier dispositif de commande (231) étant configuré pour :
recevoir les données (205) indiquant des informations à marquer sur le produit (220),
générer une partie des vecteurs de marquage laser sur la base des données (205) reçues,
commander la première tête de marquage laser (201) sur la base de la partie de vecteurs de marquage laser générée et du quatrième signal de détecteur, et
produire un signal d'émission indicatif d'une partie restante des données indicatives des informations à marquer sur le produit (220), le deuxième dispositif de commande (232) étant configuré pour :
recevoir le signal d'émission indicatif de la partie restante des données,
générer des vecteurs de marquage laser restants sur la base du signal reçu, et
commander la deuxième tête de marquage laser (202) sur la base des vecteurs de marquage laser restants et du quatrième signal de détecteur,
ou
dans lequel le premier dispositif de commande (231) est configuré pour :
recevoir des informations sur la vitesse du produit,
utiliser les informations sur la vitesse du produit et le quatrième signal de détecteur pour déterminer si la première tête de marquage laser (201) dispose de suffisamment de temps pour imprimer un vecteur de marquage laser, et
si le premier dispositif de commande (231) détermine que la première tête de marquage laser (201) ne dispose pas de suffisamment de temps pour imprimer le vecteur de marquage laser, empêcher la première tête de marquage laser (201) de marquer le produit (220) et transmettre le vecteur de marquage laser au deuxième dispositif de commande (232) en tant qu'élément du signal d'émission.

13. Procédé de marquage laser d'un produit (220) comprenant les étapes consistant à :
recevoir des données (205) indiquant des informations à marquer sur le produit (220),
générer des vecteurs de marquage laser (A1-D2) sur la base des données (205) reçues,
utiliser un premier dispositif de commande (231) pour commander une première tête de marquage laser (201) sur la base des vecteurs de marquage laser (A1-D2) pour marquer le produit (220), et
utiliser un deuxième dispositif de commande (232) pour commander une deuxième tête de marquage laser (202) sur la base des vecteurs de marquage laser (A1-D2) pour marquer le produit (220).

14. Procédé selon la revendication 13, comprenant les étapes consistant à :
utiliser le premier dispositif de commande (231) pour générer les vecteurs de marquage laser (A1-D2) sur la base des données (205),
déterminer un premier sous-ensemble des vecteurs de marquage laser (A1, A2) à conserver pour le premier dispositif de commande (231) et un deuxième sous-ensemble des vecteurs de marquage laser (B1-B4) à fournir au deuxième dispositif de commande (232),
utiliser le premier dispositif de commande (231) pour commander la première tête de marquage laser (201) au moins partiellement sur la base du premier sous-ensemble des vecteurs de marquage laser (A1, A2),
fournir le deuxième sous-ensemble des vecteurs de marquage laser (B1-B4) au deuxième dispositif de commande (232), et
utiliser le deuxième dispositif de commande (232) pour commander la deuxième tête de marquage laser (202) au moins partiellement sur la base du deuxième sous-ensemble des vecteurs de marquage laser (B1-B4) ;
ou
comprenant les étapes consistant à :
déterminer un premier sous-ensemble des données (A) à conserver pour le premier dispositif de commande (231) et un deuxième sous-ensemble des données (B) à fournir au deuxième dispositif de commande (232),
utiliser le premier dispositif de commande (231) pour générer un premier sous-ensemble des vecteurs de marquage laser (A1, A2) sur la base du premier sous-ensemble des données (A),
utiliser le premier dispositif de commande (231) pour commander la première tête de marquage laser (201) au moins partiellement sur la base du premier sous-ensemble des vecteurs de marquage laser (A1, A2),
fournir le deuxième sous-ensemble des données (B) au deuxième dispositif de commande (232),
utiliser le deuxième dispositif de commande (232) pour générer un deuxième sous-ensemble des vecteurs de marquage laser (B1-B4) sur la base du deuxième sous-ensemble des données (B), et
utiliser le deuxième dispositif de commande (232) pour commander la deuxième tête de marquage laser (202) sur la base au moins partiellement du deuxième sous-ensemble des vecteurs de marquage laser (B1-B4) ;
ou
comprenant les étapes consistant à :
déterminer un premier sous-ensemble des données (A) à conserver pour le premier dispositif de commande (231) et un deuxième sous-ensemble des données (B) à fournir au deuxième dispositif de commande (232),
utiliser le premier dispositif de commande (231) pour générer un premier sous-ensemble des vecteurs de marquage laser (A1, A2) sur la base du premier sous-ensemble des données (A) et un deuxième sous-ensemble des vecteurs de marquage laser (B1-B4) sur la base du deuxième sous-ensemble des données (B),
utiliser le premier dispositif de commande (231) pour commander la première tête de marquage laser (201) au moins partiellement sur la base du premier sous-ensemble de vecteurs de marquage laser (A1, A2),
fournir le deuxième sous-ensemble des vecteurs de marquage laser (B1-B4) au deuxième dispositif de commande (232), et
utiliser le deuxième dispositif de commande (232) pour commander la deuxième tête de marquage laser (202) au moins partiellement sur la base du deuxième sous-ensemble des vecteurs de marquage laser (B1-B4).

15. Procédé selon la revendication 13 ou la revendication 14, comprenant les étapes consistant à :
utiliser le premier dispositif de commande (231) pour générer un troisième sous-ensemble de données (205) indiquant des informations à marquer sur le produit (220),
utiliser le premier dispositif de commande (231) pour générer un troisième sous-ensemble des vecteurs de marquage laser sur la base du troisième sous-ensemble de données,
fournir le troisième sous-ensemble de vecteurs de marquage laser au deuxième dispositif de commande (232), et
utiliser le deuxième dispositif de commande (232) pour commander la deuxième tête de marquage laser (202) au moins partiellement sur la base du troisième sous-ensemble des vecteurs de marquage laser ;
et facultativement
dans lequel le troisième sous-ensemble de données indique des informations dynamiques à marquer sur le produit (220), et dans lequel le troisième sous-ensemble de vecteurs de marquage laser est statique.
